# EUROPEAN PATENT APPLICATION

(11) **EP 2 226 884 A1**
(43) Date of publication of application: **08.09.2010**
(21) Application number: 08863757.4
(22) Date of filing: 24.12.2008
(51) Int. Cl.: H01M 8/24, H01M 8/02, H01M 8/12

(54) **LATERAL-STRIPED SOLID-OXIDE FUEL CELL**

(30) Priority: 26.12.2007 JP 2007333648; 31.03.2008 JP 2008091062
(71) Applicant: Tokyo Gas Company Limited, Tokyo 105-8527 (JP); Kyocera Corporation, Kyoto-shi Kyoto 612-8501 (JP)
(72) Inventor: FUJITA, Kenjiro, Tokyo 105-8527 (JP); NAKAMURA, Kazuo, Tokyo 105-8527 (JP); MATSUZAKI, Yoshio, Tokyo 105-8527 (JP); KOI, Makoto, Kirishima-shi Kagoshima 899-4312 (JP)
(74) Representative: Goddar, Heinz J.
(86) International application number: PCT/JP2008/073920
(87) International publication number: WO 2009/082032

(57) **Abstract**

There is obtained a segmented-in-series solid oxide fuel cell provided with a current turnaround structure. The segmented-in-series solid oxide fuel cell comprises a porous electrically insulating substrate having a fuel flow path extending from a fuel feed port to a fuel discharge port, provided therein, and a pair of the top and back surfaces, in parallel with the fuel flow path, together with a pair of side-faces of the porous electrically insulating substrate, in the transverse direction thereof, provided on the exterior thereof, wherein a plurality of solid oxide fuel cells made up by sequentially stacking an interconnector adjacent to a fuel electrode layer, the fuel electrode layer, an electrolyte layer, and an air electrode layer, and an interconnector adjacent to the air electrode layer in that order so as to be in parallel with the fuel flow path are disposed at intervals on the pair of the top and back surfaces, respectively, the plurality of the solid oxide fuel cells are structured such that adjacent solid oxide fuel cells are electrically connected in series with each other through the intermediary of the respective interconnectors, and the current turnaround structure is made up by extending the interconnector adjacent to the fuel electrode layer, the electrolyte layer, and the interconnector adjacent to the air electrode layer, making up a pair of the solid oxide fuel cells, positioned at the extreme end of the top and back surfaces of the electrically insulating substrate, in the longitudinal direction thereof, adjacent to the fuel discharge port, on the pair of the top and back surfaces of the electrically insulating substrate, respectively, to both the side faces of the electrically insulating substrate, in the transverse direction thereof, to be disposed thereon.

## Description

### TECHNICAL FIELD

The present invention relates to a segmented-in-series solid oxide fuel cell, and more specifically, to a segmented-in-series solid oxide fuel cell comprising a porous electrically insulating substrate having a fuel flow path, provided therein, and a plurality of solid oxide fuel cells disposed in a segmented-in-series fashion, provided on a pair of surfaces of the porous electrically insulating substrate, opposing each other, and a segmented-in-series solid oxide fuel cell comprising a porous electrically insulating substrate having an air flow path, provided therein, and a plurality of solid oxide fuel cells disposed in a segmented-in-series fashion, provided on a pair of surfaces of the porous electrically insulating substrate, opposing each other. The solid oxide fuel cell is hereinafter termed merely as "the cells" for short as appropriate.

### BACKGROUND TECHNOLOGY

A segmented-in-series solid oxide fuel cell is a fuel cell of a type wherein a plurality of cells disposed in a segmented-in-series fashion are made up by disposing a fuel electrode layer, and an air electrode layer in such a way as to cause an electrolytic material composed of an electrolyte to be sandwiched therebetween while disposing an interconnector on a side of the cell, adjacent to the fuel electrode layer, and an interconnector on a side of the cell, adjacent to the air electrode layer, as appropriate. The segmented-in-series oxide fuel type cell includes a cylindrical type as described in JP Hei 10 (1998) - 3932 - A (hereinafter referred to as Patent Document 1), a hollow flat type as described in JP 2006 -19059 - A (hereinafter referred to as Patent Document 2), and so forth.

When the solid oxide fuel cell is operated, fuel is circulated to the fuel electrode layer of the cell, an oxidizer gas (hereinafter typically referred to as "air" where appropriate), such as air, oxygen, and so forth, is flowed to the air electrode layer thereof, and the respective electrodes are connected to an external load, whereupon electric power is obtained. However, with the use of a single cell of one unit only, a voltage only in a range of about 0.7 to 0.8V at most can be obtained, there is the need for electrically connecting a plurality of single cells (the cells) in series with each other in order to obtain electric power for practical use.

The segmented-in-series solid oxide fuel cell of the hollow flat type is made up by disposing the plurality of the cells on the respective flat surfaces of a porous electrically insulating substrate, in a hollow flat sectional shape, that is, an electrically insulating substrate, more specifically, on each of a pair of the surfaces thereof, opposing each other, and by electrically connecting adjacent cells with each other via an interconnector. A hollow part of the electrically insulating substrate in the hollow flat sectional shape is formed inside the substrate, and the hollow part normally serves as a gas flow path for flowing fuel or air from a port at one end thereof toward a port at the other end thereof (as a fuel flow path in the case of flowing fuel, and as an air flow path in the case of flowing air).

With the segmented-in-series solid oxide fuel cell, cell layout has high flexibility, and a current output position can be optionally set, however, in practical application, the current output position is set at the same end of the electrically insulating substrate. In such a case, a current at the time of operation is caused to flow from an end of the electrically insulating substrate, in the direction of a lineup of the plurality of the cells disposed on the top surface of the electrically insulating substrate, and to an end of one of the plurality of the cells disposed on the back surface of the electrically insulating substrate (that is, to an end of the electrically insulating substrate, on the back surface side thereof) in the direction opposite from the direction of a current flow on the top surface side.

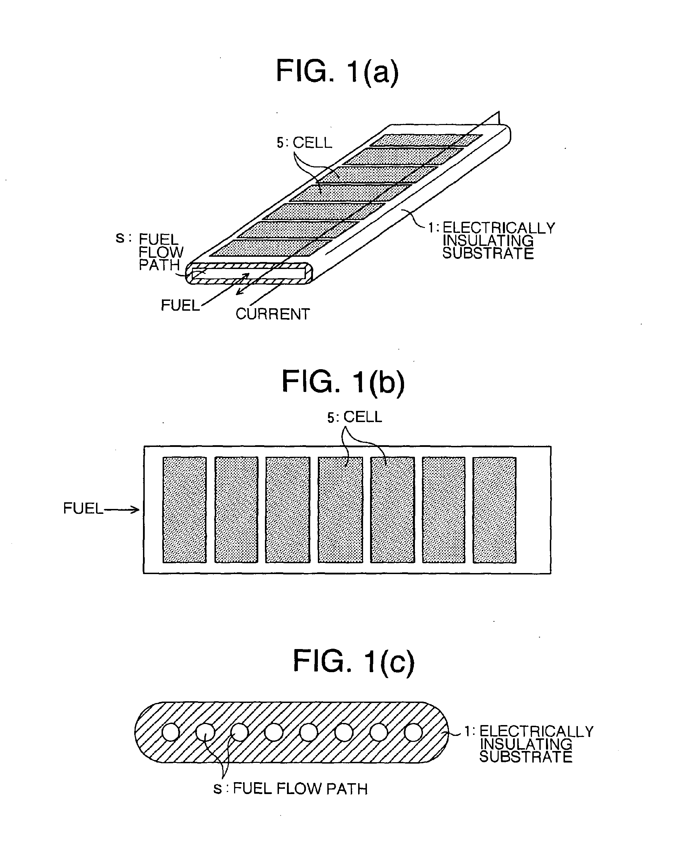

Figs. 1(a) to 1(c) are views showing an example of the structure of a segmented-in-series solid oxide fuel cell of the hollow flat type, in which Fig. 1(a) is a perspective view, and Fig. 1(b) is a plan view. A plurality of cells 5, each having a three-layered structure comprised of a fuel electrode layer, an electrolyte layer, and an air electrode layer, are disposed on both an upper surface and an underside surface of an electrically insulating substrate 1 in a hollow flat sectional shape, namely, both the top surface, and the back surface thereof. The segmented-in-series solid oxide fuel cell is made up by electrically connecting the adjacent cells in series with each other through the intermediary of an interconnector.

At the time of operation of the segmented in series solid oxide fuel cell of the hollow flat type, fuel is flowed through a fuel flow path S extending from a fuel feed port to a fuel discharge port, provided in the electrically insulating substrate 1, in parallel with the lineup of the cells 5, as indicated by the arrow (→) in Fig. 1(a). The number of the fuel flow paths S is not limited to one, and a plurality thereof may be provided, and Fig. 1(c) illustrates an example where eight pieces of the fuel flow paths S are provided. Further, the electrically insulating substrate 1, in a mode of the hollow flat type shown in Fig. 1(a), is rectangular in cross sectional shape (in sectional shape perpendicular to the direction of the lineup of the plurality of the cells), but the cross sectional shape of the electrically insulating substrate 1 is not limited thereto, and may be square, elliptical, and so forth, as appropriate.

In Fig. 1(a), there is shown a current flow during operation in a mode where current is turned around at the end of the electrically insulating substrate 1, in the direction of a fuel flow, that is, at the fuel discharge port. Referring to Fig. 1(a), the segmented-in-series solid oxide fuel cell is structured such that a current is caused to flow from a proximal end of the electrically insulating substrate 1 to an end on the opposite side thereof, that is, from the cell 5 disposed at a distal end on the back surface of the electrically insulating substrate 1 to the cell 5 disposed at a distal end on the top surface thereof. Now, a state in which a current flowing toward one end of the electrically insulating substrate, on one of the surfaces thereof, continues to flow to the other surface thereof, at the one end, and subsequently, the current flows toward the other end of the electrically insulating substrate is hereinafter referred to as "a current is turned around" in the present specification. A structure for causing this state is called a current-turnaround structure where appropriate.

With reference to the present specification, and accompanying drawings, terms the top surface, and the back surface are used in referring to both the top and back surfaces of the electrically insulating substrate, or both surfaces of the top surface, and the back surface thereof, and so forth, however, it is to be understood that those terms are used just for the sake of convenience in explanation, and in, for example, the perspective view of Fig. 1(a), an upper surface, that is, a visible surface is referred to as the top surface, whereas an underside surface, that is, an invisible surface is referred to as the back surface, and therefore, if the electrically insulating substrate is turned upside down, the back surface in Fig. 1(a) will be the top surface while the top surface in Fig. 1(a) will be the back surface.

### DISCLOSURE OF THE INVENTION

### Problems to be Solved by the Invention

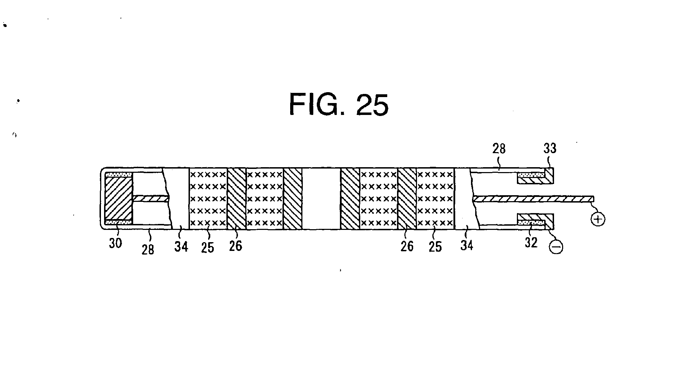

With the segmented-in-series solid oxide fuel cell described in Patent Document 1, a plurality of cells 25 are disposed on an electrically insulating substrate 28 such that the cells 25 are electrically connected in series with each other, and a current inlet and a current outlet are positioned at respective ends of the electrically insulating substrate 28, as shown in Fig. 25. In this case, there is the need for drawing a lead wire for use in outputting current through the electrically insulating substrate 28 up to a plus terminal at the right end thereof, so that there are needs for various design ideas such as a measure for preventing the lead wire from being disengaged, and so forth.

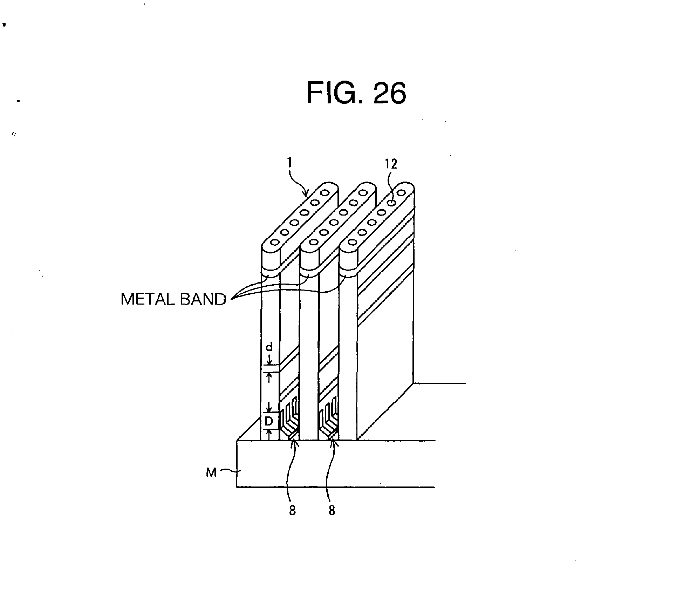

Further, with the segmented-in-series solid oxide fuel cell as described in Patent Document 2, use is made of a metal band to be used in turning around current, provided on the outer periphery of an end of an electrically insulating substrate, as shown in Fig. 26. However, in the case of the segmented-in-series solid oxide fuel cell of such a type as to use the metal band, there is a concern about reliability of the metal band in terms of breakage of the metal band, and so forth, attributable to oxidation thereof, due to a thermal cycle caused by repetition in operation / stoppage of the segmented-in-series solid oxide fuel cell, and because the metal band is exposed to an air flow path side of the segmented-in-series solid oxide fuel cell, in an oxidizing atmosphere, there is also a concern about the risk of the metal band being disengaged to come into contact with an external part, thereby developing a short-circuit.

The present invention has been developed in order to solve problems described as above with the segmented in series solid oxide fuel cell, and it is an object of the present invention to provide a segmented-in-series solid oxide fuel cell having a safe and highly reliable structure capable of exhibiting stable power generation performance at a high fuel utilization ratio, serving as means for turning around current at an end of the segmented-in-series solid oxide fuel cell, on a current turnaround side thereof.

### Means for Solving the Problem

In accordance with an aspect (1) of the present invention, there is provided a segmented-in-series solid oxide fuel cell comprising a porous electrically insulating substrate having (a) a fuel flow path extending from a fuel feed port to a fuel discharge port, provided therein, and a pair of the top and back surfaces, in parallel with the fuel flow path, together with a pair of side-faces of the porous electrically insulating substrate, in the transverse direction thereof, provided on the exterior thereof, wherein (b) a plurality of solid oxide fuel cells made up by sequentially stacking an interconnector adjacent to a fuel electrode layer, the fuel electrode layer, an electrolyte layer, an air electrode layer, and an interconnector adjacent to the air electrode layer in that order so as to be in parallel with the fuel flow path are disposed at intervals on the pair of the top and back surfaces, respectively, and (c) the plurality of the solid oxide fuel cells are structured such that adjacent solid oxide fuel cells are electrically connected in series with each other through the intermediary of the respective interconnectors.

Further, (d) a current turnaround structure is made up by extending the interconnector adjacent to the fuel electrode layer, the electrolyte layer, and the interconnector adjacent to the air electrode layer, making up a pair of the solid oxide fuel cells, positioned at the extreme end of the electrically insulating substrate, in the longitudinal direction thereof, adjacent to the fuel discharge port, on the pair of the top and back surfaces of the electrically insulating substrate, respectively, to both the side faces of the electrically insulating substrate, in the transverse direction thereof, to be disposed thereon.

In accordance with an aspect (2) of the present invention, there is provided a segmented-in-series solid oxide fuel cell comprising a porous electrically insulating substrate having (a) a fuel flow path extending from a fuel feed port to a fuel discharge port, provided therein, and a pair of the top and back surfaces, in parallel with the fuel flow path, together with a pair of side-faces of the porous electrically insulating substrate, in the transverse direction thereof, provided on the exterior thereof, wherein (b) a plurality of solid oxide fuel cells made up by sequentially stacking an interconnector adjacent to a fuel electrode layer, the fuel electrode layer, an electrolyte layer, an air electrode layer, and an interconnector adjacent to the air electrode layer in that order so as to be in parallel with the fuel flow path are disposed at intervals on the pair of the top and back surfaces, respectively, and (c) the plurality of the solid oxide fuel cells are structured such that adjacent solid oxide fuel cells are electrically connected in series with each other through the intermediary of the respective interconnectors. Further, (d) a current turnaround structure is made up by extending the interconnector adjacent to the fuel electrode layer, the fuel electrode layer, the electrolyte layer, and the interconnector adjacent to the air electrode layer, making up a pair of the solid oxide fuel cells, positioned at the extreme end of the electrically insulating substrate, in the longitudinal direction thereof, adjacent to the fuel discharge port, on the pair of the top and back surfaces of the electrically insulating substrate, respectively, to both the side faces in the transverse direction of the electrically insulating substrate to be disposed thereon.

In accordance with an aspect (3) of the present invention, there is provided a segmented-in-series solid oxide fuel cell comprising a porous electrically insulating substrate having (a) a fuel flow path extending from a fuel feed port to a fuel discharge port, provided therein, and a pair of the top and back surfaces, in parallel with the fuel flow path, together with a pair of side-faces of the porous electrically insulating substrate, in the transverse direction thereof, provided on the exterior thereof, wherein (b) a plurality of solid oxide fuel cells made up by sequentially stacking an interconnector adjacent to a fuel electrode layer, the fuel electrode layer, an electrolyte layer, an air electrode layer, and an interconnector adjacent to the air electrode layer in that order so as to be in parallel with the fuel flow path are disposed at intervals on the pair of the top and back surfaces, respectively, and (c) the plurality of the solid oxide fuel cells are structured such that adjacent solid oxide fuel cells are electrically connected in series with each other through the intermediary of the respective interconnectors. Further, (d) a current turnaround structure is made up by extending the interconnector adjacent to the fuel electrode layer, the electrolyte layer, the air electrode layer, and the interconnector adjacent to the air electrode layer, making up a pair of the solid oxide fuel cells, positioned at the extreme end of the electrically insulating substrate, in the longitudinal direction thereof, adjacent to the fuel discharge port, on the pair of the top and back surfaces of the electrically insulating substrate, respectively, to both the side faces in the transverse direction of the electrically insulating substrate to be disposed thereon.

In accordance with an aspect (4) of the present invention, there is provided a segmented-in-series solid oxide fuel cell comprising a porous electrically insulating substrate having (a) a fuel flow path extending from a fuel feed port to a fuel discharge port, provided therein, and a pair of the top and back surfaces, in parallel with the fuel flow path, together with a pair of side-faces of the porous electrically insulating substrate, in the transverse direction thereof, provided on the exterior thereof, wherein (b) a plurality of solid oxide fuel cells made up by sequentially stacking an interconnector adjacent to a fuel electrode layer, the fuel electrode layer, an electrolyte layer, and an air electrode layer, and an interconnector adjacent to the air electrode layer in that order so as to be in parallel with the fuel flow path are disposed at intervals on the pair of the top and back surfaces, respectively, and (c) the plurality of the solid oxide fuel cells are structured such that adjacent solid oxide fuel cells are electrically connected in series with each other through the intermediary of the respective interconnectors. Further, (d) a current turnaround structure is made up by extending the interconnector adjacent to the fuel electrode layer, the fuel electrode layer, the electrolyte layer, the air electrode layer, and the interconnector adjacent to the air electrode layer, making up a pair of the solid oxide fuel cells, positioned at the extreme end of the electrically insulating substrate, in the longitudinal direction thereof, adjacent to the fuel discharge port, on the pair of the top and back surfaces of the electrically insulating substrate, respectively, to both the side faces in the transverse direction of the electrically insulating substrate to be disposed thereon.

In accordance with an aspect (5) of the present invention, there is provided a segmented-in-series solid oxide fuel cell comprising a porous electrically insulating substrate having (a) an air flow path extending from an air feed port to an air discharge port, provided therein, and a pair of the top and back surfaces, in parallel with the air flow path, together with a pair of side-faces of the porous electrically insulating substrate, in the transverse direction thereof, provided on the exterior thereof, wherein (b) a plurality of solid oxide fuel cells made up by sequentially stacking an interconnector adjacent to an air electrode layer, the air electrode layer, an electrolyte layer, a fuel electrode layer, and an interconnector adjacent to the fuel electrode layer in that order so as to be in parallel with the air flow path are disposed at intervals on the pair of the top and back surfaces, respectively, and (c) the plurality of the solid oxide fuel cells are structured such that adjacent solid oxide fuel cells are electrically connected in series with each other through the intermediary of the respective interconnectors. Further, (d) a current turnaround structure is made up by extending the interconnector adjacent to the air electrode layer, the electrolyte layer and the interconnector adjacent to the fuel electrode layer, making up a pair of the solid oxide fuel cells, positioned at the extreme end of the electrically insulating substrate, in the longitudinal direction thereof, adjacent to the air discharge port, on the pair of the top and back surfaces of the electrically insulating substrate, respectively, to both the side faces in the transverse direction of the electrically insulating substrate to be disposed thereon.

In accordance with an aspect (6) of the present invention, there is provided a segmented-in-series solid oxide fuel cell comprising a porous electrically insulating substrate having (a) an air flow path extending from an air feed port to an air discharge port, provided therein, and a pair of the top and back surfaces, in parallel with the air flow path, together with a pair of side-faces of the porous electrically insulating substrate, in the transverse direction thereof, provided on the exterior thereof, wherein (b) a plurality of solid oxide fuel cells made up by sequentially stacking an interconnector adjacent to an air electrode layer, the air electrode layer, an electrolyte layer, a fuel electrode layer, and an interconnector adjacent to the fuel electrode layer in that order so as to be in parallel with the air flow path are disposed at intervals on the pair of the top and back surfaces, respectively, and (c) the plurality of the solid oxide fuel cells are structured such that adjacent solid oxide fuel cells are electrically connected in series with each other through the intermediary of the respective interconnectors. Further, (d) a current turnaround structure is made up by extending the interconnector adjacent to the air electrode layer, the electrolyte layer, the fuel electrode layer and the interconnector adjacent to the fuel electrode layer, making up a pair of the solid oxide fuel cells, positioned at the extreme end of the electrically insulating substrate, in the longitudinal direction thereof, adjacent to the air discharge port, on the pair of the top and back surfaces of the electrically insulating substrate, respectively, to both the side faces in the transverse direction of the electrically insulating substrate to be disposed thereon.

In accordance with an aspect (7) of the present invention, there is provided a segmented-in-series solid oxide fuel cell comprising a porous electrically insulating substrate having (a) an air flow path extending from an air feed port to an air discharge port, provided therein, and a pair of the top and back surfaces, in parallel with the air flow path, together with a pair of side-faces of the porous electrically insulating substrate, in the transverse direction thereof, provided on the exterior thereof, wherein (b) a plurality of solid oxide fuel cells made up by sequentially stacking an interconnector adjacent to an air electrode layer, the air electrode layer, an electrolyte layer, a fuel electrode layer, and an interconnector adjacent to the fuel electrode layer in that order so as to be in parallel with the air flow path are disposed at intervals on the pair of the top and back surfaces, respectively, and (c) the plurality of the solid oxide fuel cells are structured such that adjacent solid oxide fuel cells are electrically connected in series with each other through the intermediary of the respective interconnectors. Further, (d) a current turnaround structure is made up by extending the interconnector adjacent to the air electrode layer, the air electrode layer, the electrolyte layer and the interconnector adjacent to the fuel electrode layer, making up a pair of the solid oxide fuel cells, positioned at the extreme end of the electrically insulating substrate, in the longitudinal direction thereof, adjacent to the air discharge port, on the pair of the top and back surfaces of the electrically insulating substrate, respectively, to both the side faces in the transverse direction of the electrically insulating substrate to be disposed thereon.

In accordance with an aspect (8) of the present invention, there is provided a segmented-in-series solid oxide fuel cell comprising a porous electrically insulating substrate having (a) an air flow path extending from an air feed port to an air discharge port, provided therein, and a pair of the top and back surfaces, in parallel with the fuel flow path, together with a pair of side-faces of the porous electrically insulating substrate, in the transverse direction thereof, provided on the exterior thereof, wherein (b) a plurality of solid oxide fuel cells made up by sequentially stacking an interconnector adjacent to an air electrode layer, the air electrode layer, an electrolyte layer, a fuel electrode layer, and an interconnector adjacent to the fuel electrode layer in that order so as to be in parallel with the air flow path are disposed at intervals on the pair of the top and back surfaces, respectively, and (c) the plurality of the solid oxide fuel cells are structured such that adjacent solid oxide fuel cells are electrically connected in series with each other through the intermediary of the respective interconnectors. Further, (d) a current turnaround structure is made up by extending the interconnector adjacent to the air electrode layer, the air electrode layer, the electrolyte layer, the fuel electrode layer, and the interconnector adjacent to the fuel electrode layer, making up a pair of the solid oxide fuel cells, positioned at the extreme end of the electrically insulating substrate, in the longitudinal direction thereof, adjacent to the air discharge port, on the pair of the top and back surfaces of the electrically insulating substrate, respectively, to both the side faces in the transverse direction of the electrically insulating substrate to be disposed thereon.

### Advantage of the Invention

With the segmented-in-series solid oxide fuel cell according to the present invention, the current turnaround structure is made up by the cells positioned at the most downstream end of the electrically insulating substrate, in the direction of the fuel flow, or the airflow, so that the risk of occurrence of a short circuit, and so forth, encountered in the case of the conventional structure, can be eliminated, and the segmented-in-series solid oxide fuel cell is rendered safe and highly reliable, being capable of exhibiting stable power generation performance at a high fuel utilization ratio. Furthermore, since the current turnaround structure according to the present invention can be formed concurrently with formation of the air electrode layer, the electrolyte layer, and the fuel electrode layer, the present invention has significantly advantageous effects from the manufacturing point of view.

### BRIEF DESCRIPTION OF THE DRAWINGS

Figs. 1(a) to 1(c) are views illustrating an example of the structure of a segmented-in-series solid oxide fuel cell of a hollow flat type.
Figs. 2(a), 2(b) are views illustrating an example of the structure of a conventional segmented-in-series solid oxide fuel cell.
Figs. 3(a), 3(b) are views illustrating another example of the structure of a conventional segmented-in-series solid oxide fuel cell.
Fig. 4 is a view illustrating still another example of the structure of a conventional segmented-in-series solid oxide fuel cell.
Figs. 5(a), 5(b), 5(c) are views illustrating yet another example of the structure of a conventional segmented-in-series solid oxide fuel cell.
Figs. 6(a), 6(b) are views illustrating yet still another example of the structure of a conventional segmented-in-series solid oxide fuel cell.
Figs. 7(a), 7(b) are views illustrating features in common with aspects (1) to (4) of the present invention.
Figs. 8(a), 8(b) are views illustrating another features in common with aspects (1) to (4) of the present invention.
Figs. 9(a), 9(b) are views illustrating still another features in common with aspects (1) to (4) of the present invention.
Fig. 10 is a view illustrating yet another features in common with aspects (1) to (4) of the present invention.
Fig. 11 is a view illustrating the feature of the aspect (1) of the present invention.
Figs. 12(a), 12(b) each are a sectional view, taken on line C - C, and line D - D of Figs. 9(a), 9(b), respectively, and taken on line C - C, and line D - D of Fig. 10.
Fig. 13 is a view illustrating features of the aspect (2) of the present invention.
Fig. 14 is a view illustrating features of the aspect (3) of the present invention.
Fig. 15 is a view illustrating features of the aspect (4) of the present invention.
Fig. 16 is a view illustrating features in common with aspects (5) to (8) of the present invention.
Fig. 17 is a view illustrating features in common with aspects (5) to (8) of the present invention.
Figs. 18(a), 18(b) each are a sectional view, taken on line C - C, and line D - D of Fig. 16.
Fig. 19 is a view illustrating features of the aspect (6) of the present invention.
Fig. 20 is a view illustrating features of the aspect (7) of the present invention.
Fig. 21 is a view illustrating the aspect (8) of the present invention.
Fig. 22 is a view illustrating preparation of the sample for testing of the segmented-in-series solid oxide fuel cell according to the present invention.
Fig. 23 is a view illustrating results of internal stress tests conducted on the structure of the conventional segmented-in-series solid oxide fuel cell.
Fig. 24 is a view illustrating results of internal stress tests conducted on the segmented-in-series solid oxide fuel cell according to the present invention.
Fig. 25 is a view illustrating the segmented-in-series solid oxide fuel cell described in Patent Document 1.
Fig. 26 is a view illustrating the segmented-in-series solid oxide fuel cell described in Patent Document 2.

### Explanation of Reference Numerals

- 1: electrically insulating substrate
- 2: fuel electrode layer
- 3: electrolyte layer
- 4: air electrode layer
- 5: cell
- S: fuel flow path
- T: air flow path

### BEST MODE FOR CARRYING OUT THE INVENTION

A segmented-in-series solid oxide fuel cell according to any one of aspects (1) to (4) of the present invention is a segmented-in-series solid oxide fuel cell comprising a porous electrically insulating substrate having a fuel flow path extending from a fuel feed port to a fuel discharge port, provided therein, and a pair of top and back surfaces, in parallel with the fuel flow path, together with a pair of side-faces of the porous electrically insulating substrate, in the transverse direction thereof, provided on the exterior thereof, whereas a segmented-in-series solid oxide fuel cell according to any one of aspects (5) to (8) of the present invention is a segmented-in-series solid oxide fuel cell comprising a porous electrically insulating substrate having an air flow path extending from an air feed port to an air discharge port, provided therein, and a pair of top and back surfaces, in parallel with the fuel flow path, together with a pair of side-faces of the porous electrically insulating substrate, in the transverse direction thereof, provided on the exterior thereof.

A group of the aspects (1) to (4) of the present invention, and a group of the aspects (5) to (8) of the present invention are described hereinafter on a group-by-group basis. Features in common with both the groups are mainly described with reference to the group of the aspects (1) to (4) of the present invention although supplemental explanation is given with reference to the group of the aspects (5) to (8) of the present invention as well where appropriate.

### (Embodiments of the present invention according to the aspects (1) to (4) thereof, respectively)

A segmented-in-series solid oxide fuel cell according to the aspects (1) to (4) of the present invention is in common provided with a structure comprising a porous electrically insulating substrate having (a) a fuel flow path extending from a fuel feed port to a fuel discharge port, provided therein, and a pair of the top and back surfaces, in parallel with the fuel flow path, together with a pair of side-faces of the porous electrically insulating substrate, in the transverse direction thereof, provided on the exterior thereof, wherein (b) a plurality of solid oxide fuel cells made up by sequentially stacking an interconnector adjacent to a fuel electrode layer, the fuel electrode layer, an electrolyte layer, an air electrode layer, and an interconnector adjacent to the air electrode layer in that order so as to be in parallel with the fuel flow path are disposed at intervals on the pair of the top and back surfaces, respectively, (c) the plurality of the solid oxide fuel cells are structured such that adjacent solid oxide fuel cells are electrically connected in series with each other through the intermediary of the respective interconnectors.

As a constituent material of the electrically insulating substrate, there can be cited a mixture of MgO and MgAl₂O₄, a zirconia-based oxide, a mixture of the zirconia-based oxide, MgO and MgAl₂O₄, a mixture of NiO, MgO and Y₂O₃, and so forth although the constituent material is not limited thereto. Among those materials, the mixture of MgO and MgAl₂O₄ is preferably a mixture of MgO and MgAl₂O₄, containing MgO in a range of 20 to 70vol%. Further, as an example of the zirconia-based oxide, there can be cited yttria stabilized zirconia [YSZ: chemical formula (Y₂O₃)ₓ(ZrO₂)_{1 · x}, where x = 0.03 to 0.12], and so forth. By the zirconia-based oxide is meant to include zirconia, YSZ, and so forth:

For a constituent material of the fuel electrode layer, use is made of a material containing Ni. As an example thereof, there can be cited a material containing Ni as the main constituent thereof, a material composed of a mixture of Ni, and YSZ [chemical formula (Y₂O₃)ₓ(ZrO₂)_{1·x}, where x = 0.05 to 0.15], and so forth, although the constituent material is not limited thereto. The material composed of the mixture of Ni, and YSZ is preferably a material containing not less than 40 vol% of Ni to be dispersed in the mixture.

For a constituent material of the interconnector adjacent to the fuel electrode layer (hereinafter referred to as an interconnector C for short where appropriate), use may be made of the same material as used in the fuel electrode layer, and more preferably, a material lower in electrical resistance than the material used in the fuel electrode layer. The fuel electrode layer is made up so as to have many three-phase interfaces with the main aim of attaining chemical reaction while the interconnector C can be regarded as another fuel electrode layer (a collector fuel electrode layer) for lowering current flow resistance, however, it is described as the interconnector C in the present specification and the accompanying drawings.

For a constituent material of the electrolyte layer, use may be made of a solid electrolyte having ionic conductivity, and as an example thereof, there can be cited a material according to any one under the following items (1) to (4), however, the constituent material is not limited thereto.
(1) yttria stabilized zirconia [YSZ: chemical formula (Y₂O₃)ₓ(ZrO₂)₁· ₓ, where x = 0.05 to 0.15]
(2) scandia stabilized zirconia [chemical formula (Sc₂O₃)ₓ(ZrO₂)_{1·x}, where x = 0.05 to 0.15]
(3) yttria adobe-ceria [chemical formula (Y₂O₃)ₓ(CeO₂)_{1·x}, where x = 0.02 to 0.4]
(4) gadoria adobe-ceria [chemical formula (Gd₂O₃)ₓ(CeO₂)_{1·x}, where x=0.02to0.4]

As a constituent material of the air electrode layer, there can be cited, for example, LSM (La_{0.6}Sro_{0.4}MnO₃), LSC (La_{0.6}Sr_{0.4}Co_{1.0}O₃, and so forth), LSCF{(La_{0.6}Sr_{0.4}Co_{0.2}Fe_{0.8}O₃, La_{0.6}Sr_{0.4}Co_{0.2}Fe_{0.8}O₃ and so forth), and so forth, however, the constituent material is not limited thereto.

As a constituent material of an interconnector for use in electrical connection of adjacent cells with each other (hereinafter referred to as an interconnector A for short), there can be cited, for example, (1) perovskite ceramics composed of at least two elements selected from the group consisting of La, Cr, Y, Ce, Ca, Sr, Mg, Ba, Ni, Fe, Co, Mn, Ti, Nd, Pb, Bi, and Cu, (2) an oxide expressed by chemical formula (Ln, M) CrO₃ (in the chemical formula, Ln stands for lanthanide, and M stands for Ba, Ca, or Sr), and (3) an electrically conductive oxide expressed by chemical formula M (Ti_{1·x}Nbₓ) O₃ (in the chemical formula, M stands for at least one element selected from the group consisting of Ba, Ca, Li, Pb, Bi, Cu, Sr, La, Mg, and Ce, x= 0 to 0.4), or a material containing those oxides, although not limited thereto.

For a constituent material of an interconnector adjacent to the air electrode layer (hereinafter referred to as an interconnector B for short where appropriate), use is made of a heat-resistant and electrically conductive material, however, use may be made of the same material as the constituent material of the air electrode layer, or the constituent material of the interconnector A, and more preferably, a material lower in electrical resistance than those materials. The interconnector B need not be higher in density than the interconnector A.

The segmented-in-series solid oxide fuel cell according to the aspects (1) to (4) of the present invention, respectively, are sequentially described hereinafter in comparison with the segmented-in-series solid oxide fuel cell of the conventional structure.

The segmented-in-series solid oxide fuel cell is basically made up by electrically connecting a plurality of solid oxide fuel cells in series with each other through the intermediary of the interconnector A, the cells having a three-layered structure comprised of a fuel electrode layer, an electrolyte layer, and an air electrode layer, however, there are available various modes for disposing the interconnectors. Based on one example thereof, description will be given hereinafter, however, the present invention is not limited thereto. Further, identical constituents as described in the present specification are denoted by like reference numerals.

### (An example of the structure of a conventional segmented-in-series solid oxide fuel cell)

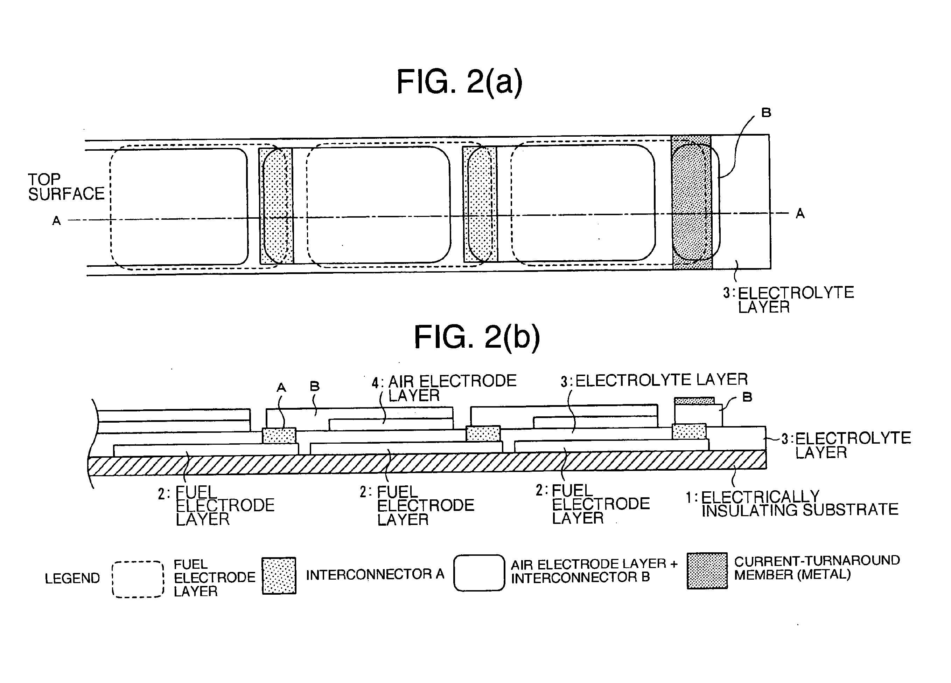

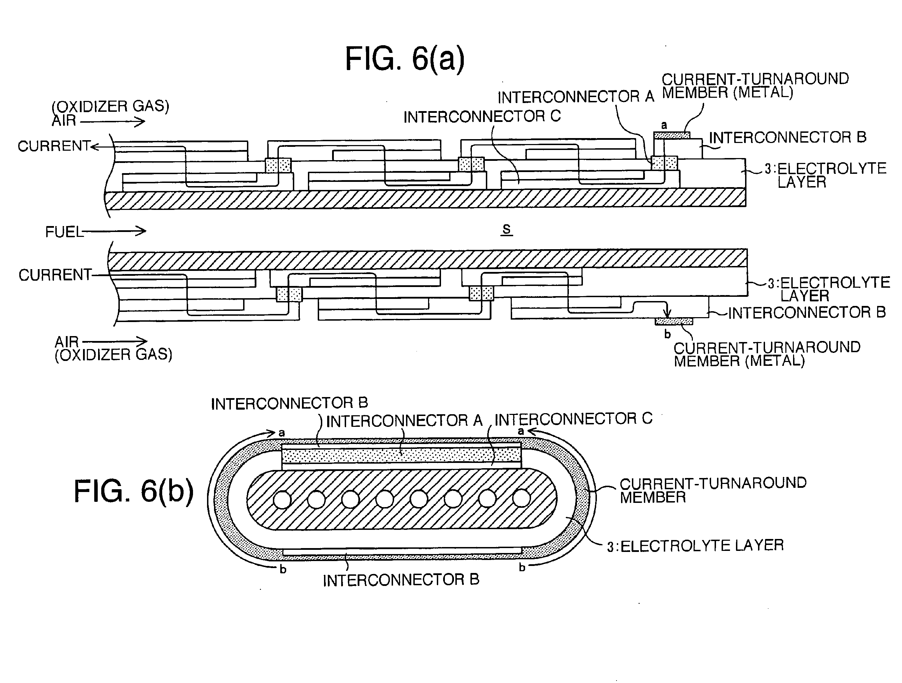

Figs. 2(a), 2(b) to Figs. 6(a), 6(b) are views illustrating various examples of the structure of a conventional segmented-in-series solid oxide fuel cell. Fig. 2(a) is a view showing the top surface of a portion of the segmented-in-series solid oxide fuel cell shown in Fig. 1(a) referred to previously, including a current-turnaround side thereof, and Fig. 2(b) is a sectional view taken on line A - A of Fig. 2(a). In Figs. 2(a), 2(b), there are shown three pieces of the cells of the portion of the segmented-in-series solid oxide fuel cell, on the current-turnaround side thereof. The same can be said of views following Figs. 2(a), 2(b), where the current-turnaround side is shown.

As shown in Figs. 2(a), 2(b), a plurality of fuel electrode layers 2 are disposed at intervals on the top surface of an electrically insulating substrate 1, an electrolyte layer 3, and an interconnector A are disposed on an upper surface of each of the fuel electrode layers 2, and an air electrode layer 4 is disposed on an upper surface of the electrolyte layer 3. Further, an interconnector B is disposed on respective upper surfaces of the interconnector A, and the electrolyte layer 3 (that is, an upper surface of a portion of the electrolyte layer 3, exposed between the interconnector A, and the air electrode layer 4), and an upper surface of the air electrode layer 4.

The interconnector A, except a portion thereof, is not visible from either the top surface, or the back surface of the electrically insulating substrate 1, and in Fig. 2(a) showing the top surface of the portion of the segmented-in-series solid oxide fuel cell, including the current-turnaround side thereof, the interconnector A is indicated by a solid line. The same can be said of each view after Figs. 2(a), 2(b), showing either the top surface, or the back surface of a portion of the segmented-in-series solid oxide fuel cell, on the current turnaround side thereof.

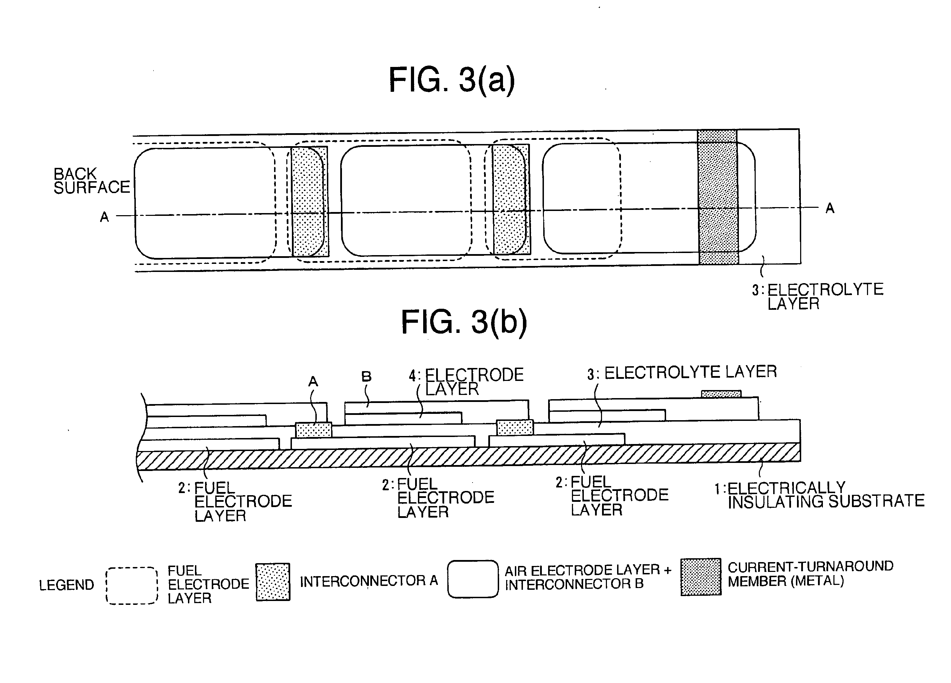

Fig. 3(a) is a view showing the back surface of the portion of the segmented-in-series solid oxide fuel cell shown in Fig. 1(a) referred to previously, including the current-turnaround side thereof, and Fig. 3(b) is a sectional view taken on line A - A of Fig. 3(a). As shown in Figs. 3(a), 3(b), a plurality of fuel electrode layers 2 are disposed at intervals on the back surface of the electrically insulating substrate 1 while an electrolyte layer 3, and an interconnector A are disposed on an upper surface of each of the fuel electrode layers 2, and an air electrode layer 4 is disposed on an upper surface of each of the electrolyte layers 3. Further, an interconnector B is disposed on respective upper surfaces of the interconnector A, and the electrolyte layer 3 (that is, an upper surface of a portion of the electrolyte layer 3, exposed between the interconnector A, and the air electrode layer 4), and an upper surface of the air electrode layer 4.

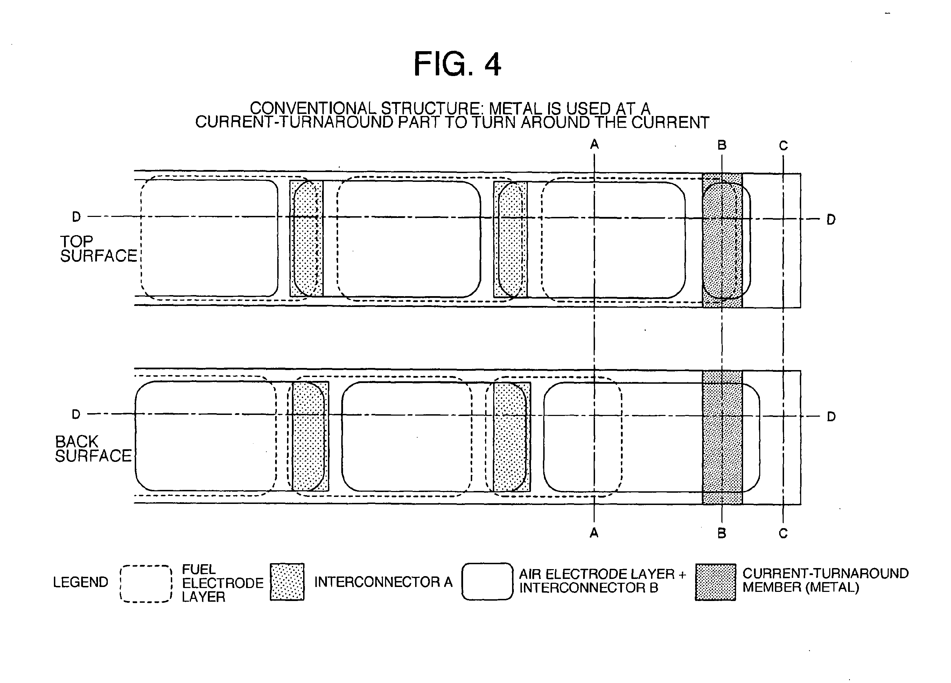

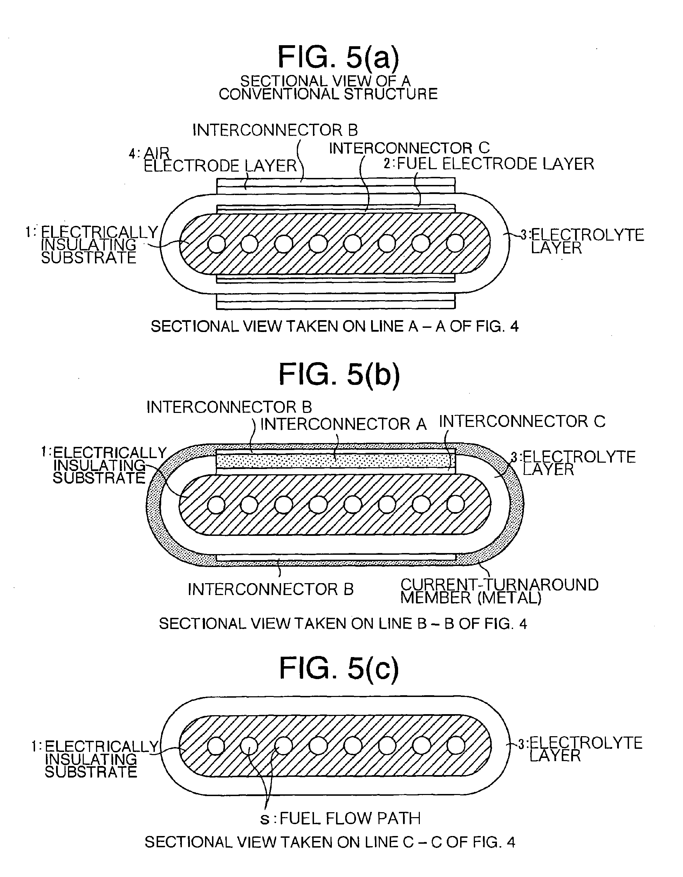

Fig. 4 is a view showing another example of the structure of the segmented-in-series solid oxide fuel cell, Fig. 4 being a view where the top side surface of the segmented-in-series solid oxide fuel cell, and the back surface side thereof are arranged side by side. Figs. 5(a) to 5(c) are sectional views taken on line A - A, line B - B, and line C - C, in Fig. 4, respectively.

Fig. 5(a) is the sectional view taken on the line A - A of Fig. 4, showing a cell positioned at the most downstream end in the direction of a fuel flow. As shown in Fig. 5(a), an interconnector C, a fuel electrode layer, an electrolyte layer, an air electrode layer, and an interconnector B are sequentially stacked in that order on both the top surface and the back surface of an electrically insulating substrate. The interconnector C is disposed on the surface of the electrically insulating substrate, and the fuel electrode layer is disposed on the interconnector C. Fig. 5(a) differs in mode from Figs. 2(a), 2(b), and Figs. 3(a), 3(b) in that the interconnector C is provided on a side of the electrically insulating substrate, adjacent to the fuel electrode layer.

Fig. 5(b) is the sectional view taken on the line B - B of Fig. 4, showing a spot where a current-turnaround member is disposed. As shown in Fig. 5(b), an interconnector C, an interconnector A and an interconnector B are sequentially stacked in that order on the top surface side of the electrically insulating substrate, and a current-turnaround member (a metal layer) is disposed on the uppermost surface thereof. Further, an electrolyte layer, and an interconnector B are sequentially stacked in that order on the back surface side of the electrically insulating substrate, and the current-turnaround member (the metal member) is disposed on the uppermost surface side thereof.

Still further, the electrolyte layer, and the current-turnaround member (the metal layer) are sequentially stacked on both the side-faces of the electrically insulating substrate (that is, the right and left side-faces of a plurality of cells disposed on either of the top and back surfaces of the electrically insulating substrate)

Fig. 5(c) is the sectional view taken on the line C - C of Fig. 4, and as shown in Fig. 5(c), the electrolyte layer is disposed so as to cover up the outer periphery of the electrically insulating substrate.

Fig. 6(a) is a sectional view of the segmented-in-series solid oxide fuel cell, taken on line D - D of Fig. 4, and Fig. 6(a) shows flows of current, fuel, and air, respectively, during operation of the segmented-in-series solid oxide fuel cell. Further, in the lower half part of Fig. 6(a), the segmented-in-series solid oxide fuel cell is shown as turned upside down as is the case of Fig. 3(b) in relation to Fig. 2(a).

Fig. 6(b) is a sectional view corresponding to Fig. 5(a), showing a current flow during operation of the segmented-in-series solid oxide fuel cell. A current flows to the current-turnaround member through the interconnector B, the interconnector A, and the interconnector C in sequence, thence flowing from a spot indicated as "b", in Figs. 6(a), 6(b), toward a spot indicated as "a" through the current-turnaround member. More specifically, as shown by the curved arrow (↑) on either of the right and left sides in Fig. 6(b), the current flows from the interconnector B on the back surface side of the electrically insulating substrate through the current turnaround member to flow to the interconnector B on the top surface side of the electrically insulating substrate. In this connection, electrons flow in the direction opposite to the flow of the current.

Now, in any of Figs. 2(a), 2(b) to 6(a), 6(b), a member indicated as "current-turnaround member (metal)" corresponds to the metal band for use in turning around of current, provided on the outer periphery of the end of the segmented-in-series solid oxide fuel cell, as described in Patent Document 2.

However, in the case of the segmented-in-series solid oxide fuel cell of the type using the metal band, as described in Patent Document 2, there is a concern about reliability of the metal band in terms of the breakage of the metal band, and so forth, attributable to oxidation thereof, due to the thermal cycle caused by repetition in operation / stoppage of the segmented-in-series solid oxide fuel cell, and because the metal band is exposed to the air flow path side of the segmented-in-series solid oxide fuel cell, in an oxidizing atmosphere, there is also a concern about the risk of the metal band being disengaged to come into contact with the external part, thereby developing a short circuit.

In contrast, with the segmented-in-series solid oxide fuel cell according to the present invention, the current-turnaround structure is made up by the cells positioned at the most downstream end of the electrically insulating substrate, in the direction of the fuel flow. That is, the current turnaround structure is formed by the cells themselves, so that the risk of occurrence of the short circuit, and so forth, encountered in the case of the conventional structure, can be eliminated, and the segmented in series solid oxide fuel cell is rendered safe and highly reliable, being capable of exhibiting stable power generation performance at a high fuel utilization ratio.

### (Embodiments of a segmented-in-series solid oxide fuel cell according to the aspects (1) to (4) of the present invention, respectively)

First, features in common with the aspects (1) to (4) of the present invention are described, and subsequently, there are described individual embodiments of the segmented-in-series solid oxide fuel cell according to the aspects (1) to (4) of the present invention.

The segmented-in-series solid oxide fuel cell according to the aspects (1) to (4) is a segmented-in-series solid oxide fuel cell comprising a porous electrically insulating substrate having (a) a fuel flow path extending from a fuel feed port to a fuel discharge port, provided therein, and a pair of the top and back surfaces, in parallel with the fuel flow path, together with a pair of side-faces of the porous electrically insulating substrate, in the transverse direction thereof, provided on the exterior thereof, wherein (b) a plurality of solid oxide fuel cells made up by sequentially stacking an interconnector adjacent to a fuel electrode layer, the fuel electrode layer, an electrolyte layer, an air electrode layer, and an interconnector adjacent to the air electrode layer in that order so as to be in parallel with the fuel flow path are disposed at intervals on the pair of the top and back surfaces, respectively, and (c) the plurality of the solid oxide fuel cells are structured such that adjacent solid oxide fuel cells are electrically connected in series with each other through the intermediary of the respective interconnectors.

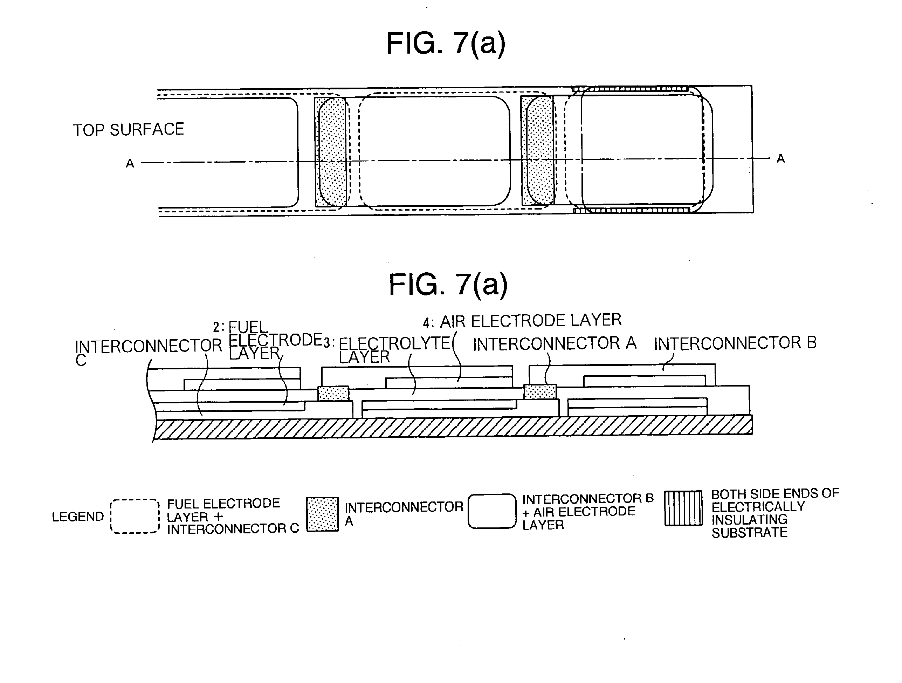

Figs. 7(a), 7(b) to Fig. 10 each are a view illustrating features in common with the aspects (1) to (4) of the present invention. Fig. 7(a) is a plan view showing the top surface of a portion of the segmented-in-series solid oxide fuel cell including a current-turnaround side thereof, and Fig. 7(b) is a sectional view taken on line A - A of Fig. 7(a). As shown Figs. 7(a), 7(b), the interconnector C, the fuel electrode layer, the interconnector A, the electrolyte layer, the air electrode layer, and the interconnector B are sequentially stacked in that order on the top surface of the electrically insulating substrate having the fuel flow path extending from the fuel feed port to the fuel discharge port, provided therein. Among those members, a part of the electrically insulating substrate, in Fig. 7(a), as indicated by legend as "both side ends of an electrically insulating substrate", is a portion of the electrically insulating substrate, for incorporating a current-turnaround structure according to any one of the aspects (1) to (4) of the present invention.

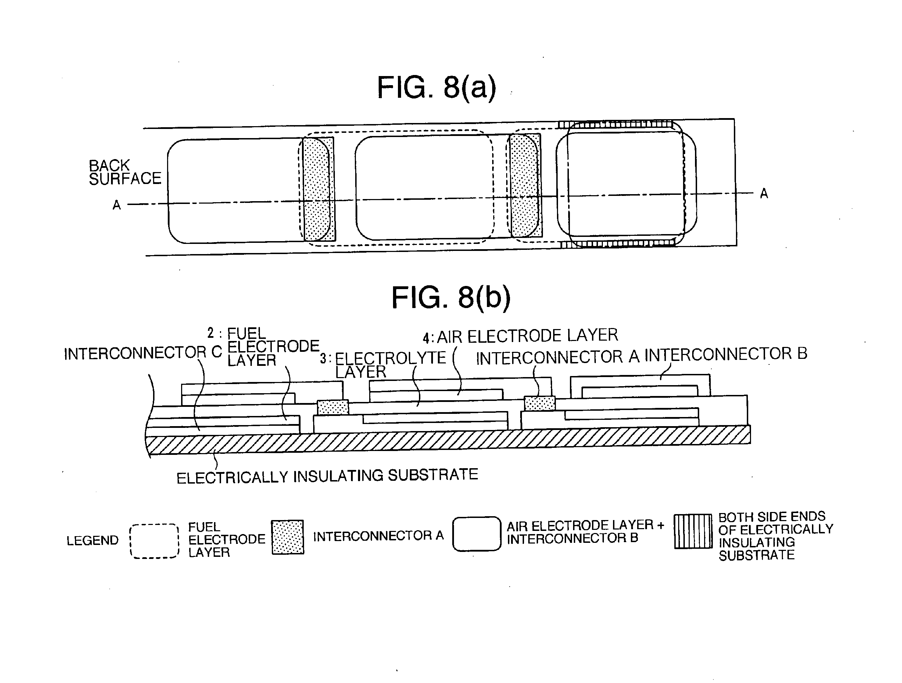

Fig. 8(a) is a plan view showing the back surface of a portion of the segmented-in-series solid oxide fuel cell, including a current-turnaround side thereof, and Fig. 8(b) is a sectional view taken on line A - A of Fig. 8(a). As shown Figs. 8(a), 8(b), the interconnector C, the fuel electrode layer, the interconnector A, the electrolyte layer, the air electrode layer, and the interconnector B are sequentially stacked in that order on the back surface of the electrically insulating substrate. Among those members, a part of the electrically insulating substrate, in Fig. 8(a), as indicated by legend as "both side ends of an electrically insulating substrate", is a portion of the electrically insulating substrate, for incorporating a current-turnaround structure according to any one of the aspects (1) to (4) of the present invention.

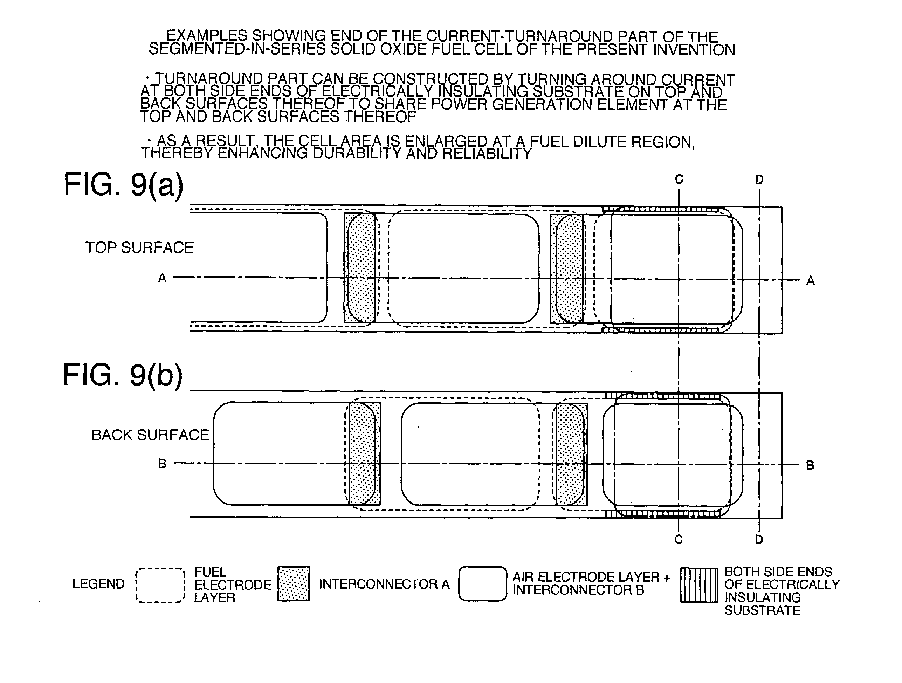

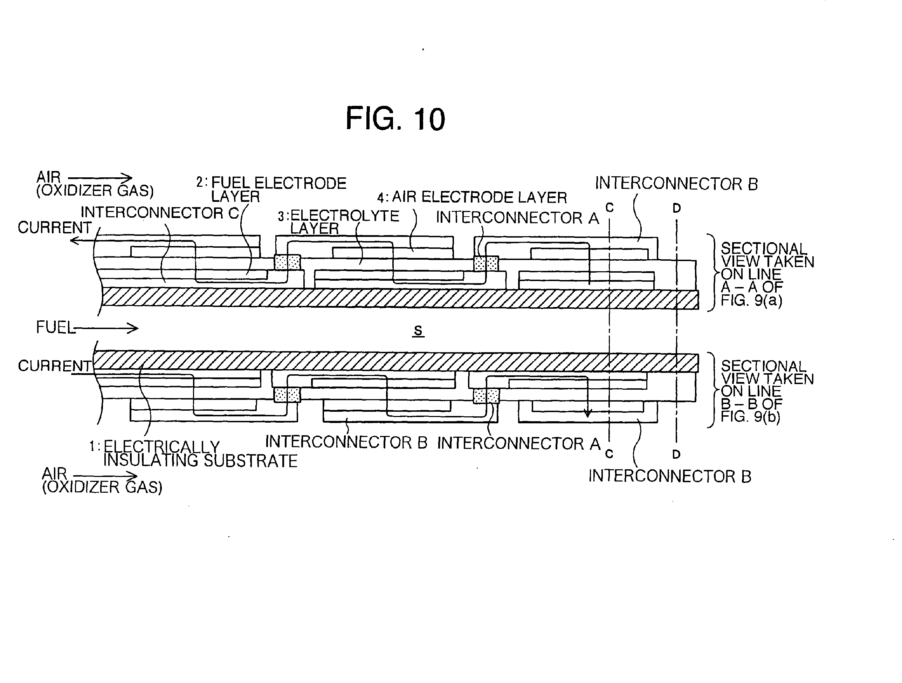

Figs. 9(a), 9(b) show Figs. 7(a), 8(a) placed side by side on the same plane of the figure, respectively, and respective spots in Figs. 9(a), and 9(b), indicated as "both side ends of an electrically insulating substrate", is a portion of the electrically insulating substrate, for incorporating the current-turnaround structure as a feature of any of the aspects (1) to (4) of the present invention. Fig. 10 shows a sectional view taken on line A - A of Fig. 9(a), and a sectional view taken on line B - B of Fig. 9(b). The aspects (1) to (4) of the present invention, respectively, have a common sectional shape as shown in Fig. 10.

### (An embodiment of a segmented-in-series solid oxide fuel cell according to the aspect (1) of the present invention)

With the aspect (1) of the present invention, an interconnector C adjacent to a fuel electrode layer, an electrolyte layer, and an interconnector B adjacent to an air electrode layer, making up a pair of solid oxide fuel cells, positioned at the extreme end of the electrically insulating substrate thereof, adjacent to a fuel discharge port, on the pair of the top and back surfaces of the electrically insulating substrate, respectively, are extended to both the right and left side faces in the transverse direction of the electrically insulating substrate, to be disposed thereon, thereby making up a current turnaround structure.

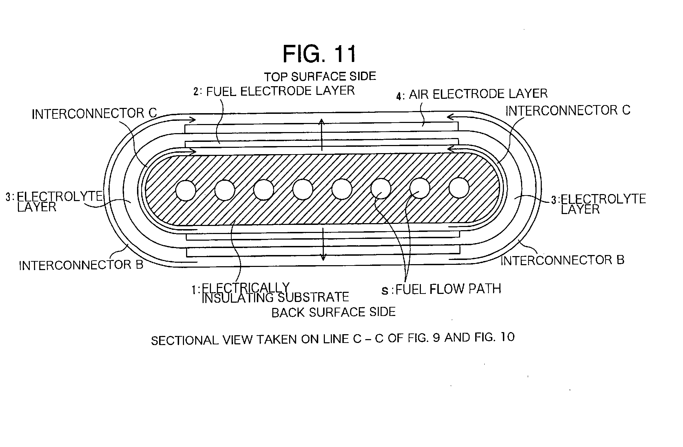

Fig. 10 and Fig. 11 each are a view illustrating features of the aspect (1) of the present invention. Fig. 10 is a view combining Fig. 7(a) and

Fig. 8(b), and Fig. 11 is a sectional view taken on line C - C in Figs. 9(a), 9(b), and Fig. 10, respectively, and enlargedly shown. Although Fig. 10 and Fig. 11 described a current flow during operation of the segmented-in-series solid oxide fuel cell, the flow of electrons is opposite to the flow of the current.

In Fig. 10, as shown in the upper half thereof (corresponding to sectional view taken on line A - A of Fig. 9(a)), the interconnector C, the fuel electrode layer, the electrolyte layer, the interconnector A, the air electrode layer, and the interconnector B are sequentially stacked in that order on the top surface of the electrically insulating substrate. In Fig. 10, as shown in the lower half thereof (corresponding to sectional view taken on line B - B of Fig. 9(b)), the interconnector C, the fuel electrode layer, the electrolyte layer, the interconnector A, the air electrode layer, and the interconnector B are sequentially stacked in that order on the back surface of the electrically insulating substrate.

Fig. 11 is a sectional view taken on line C - C in Figs. 9(a), 9(b), and Fig. 10, respectively, showing a current turnaround spot at the most downstream end in the direction of the fuel flow, and as shown in Fig. 11, the interconnector C, the fuel electrode layer, the electrolyte layer, the air electrode layer, and the interconnector B are sequentially disposed in that order on the top surface, and the back surface of the electrically insulating substrate, respectively. Then, the interconnector C, the electrolyte layer, and the interconnector B, among those members, are sequentially disposed in that order on both the side-faces of the electrically insulating substrate, that is, the right and left side-faces of a spot of the electrically insulating substrate, where the cell at the most downstream end thereof, in the direction of the fuel flow, is positioned.

Thus, in the case of the aspect (1) of the present invention, with the pair of the solid oxide fuel cells, each being positioned on a side of the electrically insulating substrate, adjacent to the fuel discharge port, that is, at the extreme end thereof, in the direction of the fuel flow, provided on either of the pair of the top and back surfaces thereof, the interconnector C adjacent to the fuel electrode layer, the electrolyte layer and the interconnector B adjacent to the air electrode layer are extended to, and disposed on the right side-face and the left side-face of the electrically insulating substrate, respectively, so as to be integrated together, thereby making up a current-turnaround structure.

By so doing, there is completed a structure wherein the cells positioned at the most downstream end of the electrically insulating substrate, in the direction of the fuel flow, one of the cells being on the top surface side thereof while the other of the cells being on the back surface side thereof, are disposed between the common interconnector C, and the common interconnector B. As a result, to put it plainly, the two cells at the most downstream end, in the direction of the fuel flow, one on the top surface of the electrically insulating substrate, and the other on the back surface thereof, will act as cells for power generation, and as means for current-turnaround.

### (Current flow in the current-turnaround structure)

A current flow in the segmented-in-series solid oxide fuel cell according to the present embodiment is described hereinafter with reference to Figs. 10, 11. As shown in Fig. 11, the interconnector C, and the interconnector B are extended toward both the right and left sides of the electrically insulating substrate, and from the back surface side to the top surface side thereof. Accordingly, a current flowing from the cell immediately preceding the current turnaround spot is turned around to flow from the back surface side of the electrically insulating substrate to the top surface side thereof via the respective interconnectors B on the right side and the left side to reach the air electrode layer on the top surface side, thereby turning on a current generated by the cell (= the cell having a structure of (the air electrode layer - the electrolyte layer - the fuel electrode layer)) on the top surface side, whereupon the current reaches the interconnector C of the cell on the top surface side of the electrically insulating substrate.

At this point in time, the cell (= the cell having the structure of (the air electrode layer - the electrolyte layer - the fuel electrode layer)) at the current turnaround spot on the back surface side as well generates power, so that a current generated by this cell flows from the interconnector C on the back surface side to be turned around toward the top surface side via the respective interconnectors C on the right side and the left side, thereby reaching the interconnector B on the top surface side of the electrically insulating substrate.

Thus, flowing to the interconnector B, on the top surface side, is a composite current composed of (a) the current flowing from the cell immediately preceding the current turnaround spot on the back surface side, (b) the current generated by the cell at the current turnaround spot on the back surface side, and (c) the current generated by the cell at the current turnaround spot on the top surface side. Subsequently, the composite current flows to the cell immediately preceding the current turnaround spot, on the top surface side via the interconnectors A, C, continuous from the interconnector B on the top surface side.

Further, the interconnector C adjacent to the fuel electrode layer, the electrolyte layer, and the interconnector B adjacent to the air electrode layer may be disposed on either one side-face of the right and left side-faces of a part of the electrically insulating substrate, where the cell at the most downstream end in the direction of the fuel flow is positioned, however, if the interconnector C adjacent to the fuel electrode layer, the electrolyte layer, and the interconnector B adjacent to the air electrode layer are extended to both the right and left side-faces of the electrically insulating substrate to be then disposed thereon as is the case with the aspect (1) of the present invention, this will enable electrical resistance to be lowered as compared with the case of disposing those members on either one side-face of the right and left side-faces of the electrically insulating substrate, and moreover, the current-turnaround structure will be formed with greater ease.

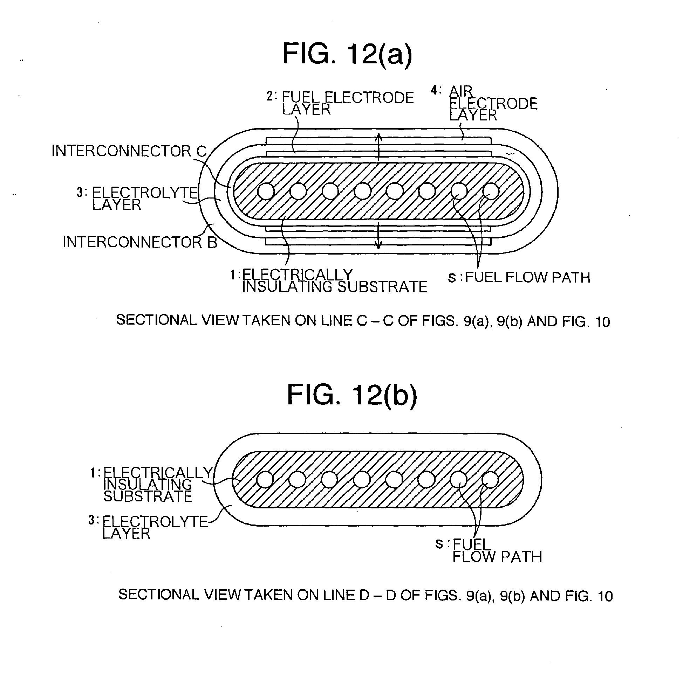

Figs. 12(a), 12(b) are sectional views, taken on line C - C, and line D - D of Figs. 9(a), 9(b), Fig. 10, respectively. With the conventional structure, there is the need for disposing "the current turnaround member (metal)" at the end of the electrically insulating substrate, as shown in Fig. 5(b) [= Fig. 6(b)] previously referred to, however, with the aspect (1) of the present invention, " the current turnaround member (metal)" is no longer required, so that the segmented-in-series solid oxide fuel cell can be simplified in terms of structure. The same can be said of the current turnaround structure according to any one of the aspects (2) to (8) of the present invention.

With the aspect (1) of the present invention, since a member such as the metal band, susceptible to oxidation in an oxidizing atmosphere, is not used in the current turnaround part, there is no risk of a short-circuit, and further, since use of dissimilar materials is avoided, a highly reliable current turnaround part can be constructed. In addition, since a power generation area at the most downstream end in the direction of the fuel flow can be enlarged, cell durability can be enhanced. The same can be said of the current turnaround structure according to any one of the aspects (2) to (8) of the present invention.

### (An embodiment of a segmented-in-series solid oxide fuel cell according to the aspect (2) of the present invention)

With the aspect (2) of the present invention, an interconnector C adjacent to a fuel electrode layer, the fuel electrode layer, an electrolyte layer, and an interconnector B adjacent to an air electrode layer, making up a pair of solid oxide fuel cells, positioned at the extreme end of the top and back surfaces of the electrically insulating substrate thereof, adjacent to a fuel discharge port, respectively, are extended to both the right and left side faces in the transverse direction of the electrically insulating substrate, to be disposed thereon, thereby making up a current turnaround structure.

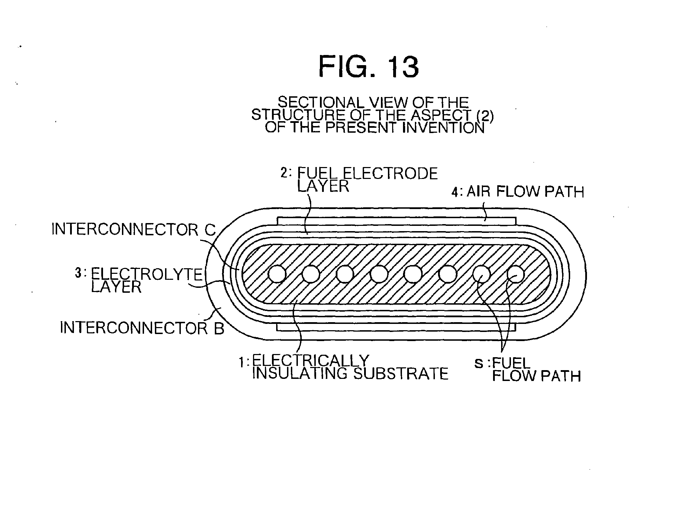

Fig. 13 is a view illustrating features of the aspect (2) of the present invention and a sectional view showing the current turnaround spot at the most downstream end in the direction of the fuel flow. As shown in Fig. 13, the interconnector C, the fuel electrode layer, the electrolyte layer, the air electrode layer and interconnector B are sequentially disposed on the top and back surfaces of the electrically insulating substrate. Among those members, the interconnector C adjacent to the fuel electrode layer, the fuel electrode layer, the electrolyte layer, and the interconnector B adjacent to the air electrode layer are sequentially disposed in this order on both side faces of the electrically insulating substrate, namely, on both the right and left side-faces of the electrically insulating substrate where the cell at the extreme end in the direction of fuel flow is positioned.

Thus, in the case of the aspect (2) of the present invention, with the pair of the solid oxide fuel cells, each being positioned on a side of the electrically insulating substrate, adjacent to the fuel discharge port, that is, at the extreme end thereof, in the direction of the fuel flow, provided on either of the pair of the top and back surfaces thereof, the interconnector C adjacent to the fuel electrode layer, the fuel electrode layer, the electrolyte layer and the interconnector B adjacent to the air electrode layer are extended to, and disposed on the right side-face and the left side-face of the electrically insulating substrate, respectively, so as to be integrated together, thereby making up a current-turnaround structure.

As shown on the right side and the left side of the electrically insulating substrate in Fig. 13, the interconnector C, the fuel electrode layer, the electrolyte layer, and the interconnector B are shared by the cell positioned at the most downstream end in the direction of the fuel flow, on the top surface side of the electrically insulating substrate, and the cell positioned at the most downstream end in the direction of the fuel flow, on the back surface side thereof. A current flow in the current-turnaround structure according to the present embodiment is the same as that described under the heading (Current flow in the current turnaround structure) in connection with (An embodiment of a segmented in series solid oxide fuel cell according to the aspect (1) of the present invention).

### (An embodiment of a segmented-in-series solid oxide fuel cell according to the aspect (3) of the present invention)

With the aspect (3) of the present invention, an interconnector C adjacent to a fuel electrode layer, an electrolyte layer, an air electrode layer, and an interconnector B adjacent to the air electrode layer, making up a pair of solid oxide fuel cells, positioned at the extreme end of the top and back surfaces of the electrically insulating substrate thereof, adjacent to a fuel discharge port, respectively, are extended to both the right and left side faces in the transverse direction of the electrically insulating substrate, to be disposed thereon, thereby making up a current turnaround structure.

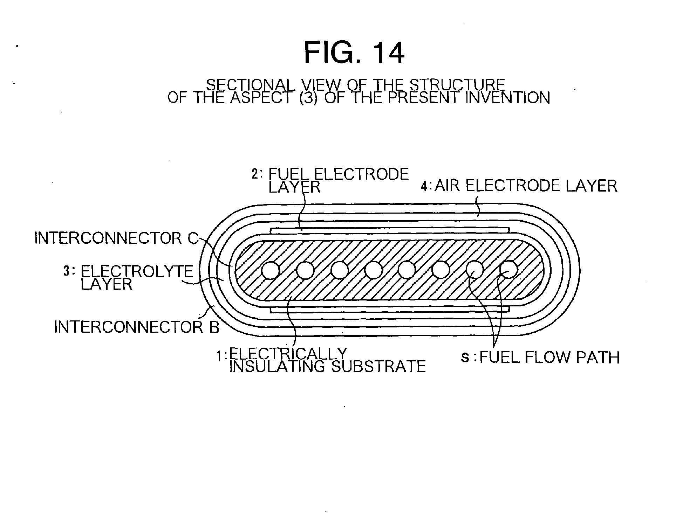

Fig. 14 is a view illustrating features of the aspect (3) of the present invention and a sectional view showing the current turnaround spot at the most downstream end in the direction of the fuel flow. As shown in Fig. 14, the interconnector C, the fuel electrode layer, the electrolyte layer, the air electrode layer and the interconnector B are sequentially disposed on the top and back surfaces of the electrically insulating substrate. Among those members, the interconnector C, the electrolyte layer, the air electrode layer and the interconnector B are sequentially disposed in this order on both side faces of the electrically insulating substrate, namely, on both the right and left side-faces of the electrically insulating substrate where the cell at the extreme end in the direction of fuel flow is positioned.

Thus, in the case of the aspect (3) of the present invention, with the pair of the solid oxide fuel cells, each being positioned on a side of the electrically insulating substrate, adjacent to the fuel discharge port, that is, at the extreme end thereof, in the direction of the fuel flow, provided on either of the pair of the top and back surfaces thereof, the interconnector C adjacent to the fuel electrode layer, the fuel electrode layer, the electrolyte layer and the interconnector B adjacent to the air electrode layer are extended to, and disposed on the right side-face and the left side-face of the electrically insulating substrate, respectively, so as to be integrated together, thereby making up a current-turnaround structure.

As shown on the right side and the left side of the electrically insulating substrate in Fig. 14, the interconnector C, the electrolyte layer, the air electrode layer, and the interconnector B are shared by the cell positioned at the most downstream end in the direction of the fuel flow, on the top surface side of the electrically insulating substrate, and the cell positioned at the most downstream end in the direction of the fuel flow, on the back surface side thereof. A current flow in the current-turnaround structure according to the present embodiment is the same as that described under the heading (Current flow in the current turnaround structure) in connection with (An embodiment of a segmented-in-series solid oxide fuel cell according to the aspect (1) of the present invention).

### (An embodiment of a segmented-in-series solid oxide fuel cell according to the aspect (4) of the present invention)

With the aspect (4) of the present invention, an interconnector C adjacent to a fuel electrode layer, the fuel electrode layer, an electrolyte layer, an air electrode layer, and an interconnector B adjacent to the air electrode layer, making up a pair of solid oxide fuel cells, positioned at the extreme end of the top and back surfaces of the electrically insulating substrate thereof, adjacent to a fuel discharge port, respectively, are extended to both the right and left side faces in the transverse direction of the electrically insulating substrate, to be disposed thereon, thereby making up a current turnaround structure.

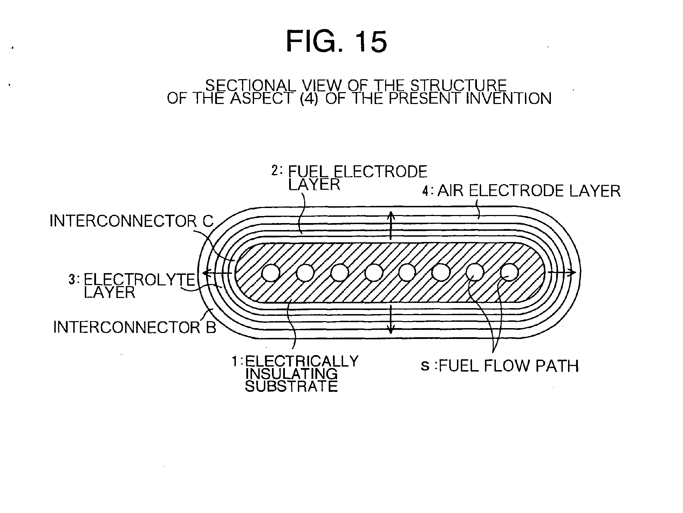

Fig. 15 is a view illustrating features of the aspect (4) of the present invention and a sectional view showing the current turnaround spot at the most downstream end in the direction of the fuel flow. As shown in Fig. 15, the interconnector C, the fuel electrode layer, the electrolyte layer, the air electrode layer and the interconnector B are sequentially disposed on the top and back surfaces of the electrically insulating substrate. Among those members, the interconnector C, the fuel electrode layer, the electrolyte layer, the air electrode layer and the interconnector B are sequentially disposed in this order on both side faces of the electrically insulating substrate, namely, on both the right and left side-faces of the electrically insulating substrate where the cell at the extreme end in the direction of fuel flow is positioned.

Thus, in the case of the aspect (4) of the present invention, with the pair of the solid oxide fuel cells, each being positioned on a side of the electrically insulating substrate, adjacent to the fuel discharge port, that is, at the extreme end thereof, in the direction of the fuel flow, provided on either of the pair of the top and back surfaces thereof, the interconnector C adjacent to the fuel electrode layer, the fuel electrode layer, the electrolyte layer, the air electrode layer and the interconnector B adjacent to the air electrode layer are extended to, and disposed on the right side-face and the left side-face of the electrically insulating substrate, respectively, so as to be integrated together, thereby making up a shared current-turnaround structure.

More specifically, the interconnector C is disposed on the right side-face and the left side-face of a part of the electrically insulating substrate, positioned at the most downstream end in the direction of the fuel flow in addition to both the top surface and the back surface of the electrically insulating substrate, that is, on the entire peripheral surface of the electrically insulating substrate, the fuel electrode layer is disposed on the entire peripheral surface of the interconnector C, the electrolyte layer is disposed on the entire peripheral surface of the fuel electrode layer, the air electrode layer is disposed on the entire peripheral surface of the electrolyte layer, and further, the interconnector B is disposed on the entire peripheral surface of the air electrode layer, thereby completing a structure wherein one cell, the interconnector C adjacent to the fuel electrode layer, and the interconnector B adjacent to the air electrode layer are disposed on the entire peripheral surface of the part of the electrically insulating substrate, positioned at the most downstream end in the direction of the fuel flow.

In the structure of the segmented in series solid oxide fuel cell according to the aspect (4) of the present invention, a current flowing from the cell immediately preceding the current turnaround spot at the most downstream end in the direction of the fuel flow via the interconnector A proceeds to the interconnector C at the current turnaround spot, flowing thence to the one cell before flowing to the interconnector B at the current turnaround spot. That is, one cell having (the fuel electrode layer - the electrolyte layer the air electrode layer) is made up between the interconnector C, and the interconnector B, and to put it plainly, the one cell acts as a cell for power generation, and as current-turnaround means.

A current flows from the interconnector B of the cell immediately preceding the current turnaround spot at the most downstream end in the direction of the fuel flow to a cell immediately preceding the current turnaround spot at the most downstream end in the direction of the fuel flow, on the top surface side of the electrically insulating substrate, via the interconnector A, and the interconnector C (to the air electrode layer of the cell).

With the aspect (4) of the present invention, sine the segmented-in-series solid oxide fuel cell is structured as above, if a total length of a plurality of cells (effective cells) disposed on the electrically insulating substrate, in the direction of the fuel flow, is constant, the cells in a current turnaround part of the electrically insulating substrate will have, in effect, an effective area at least twice as large. Accordingly, current density of the cells in the current turnaround part can be effectively lowered than that of other cells, thereby enabling potential drop to be checked.

In Figs. 10, 15, there is shown the current flow in the current turnaround structure. With the segmented-in-series solid oxide fuel cell having the current turnaround structure according to the aspect (4) of the present invention, the current during operation flows from the cell immediately preceding the current turnaround spot at the most downstream end in the direction of the fuel flow to the interconnector C at the current turnaround spot via the interconnector A to subsequently flow to the cell in the current turnaround spot before flowing to the interconnector B.

Table 1 shows various types of the current turnaround structure according to any one of aspects (1) to (4) of the present invention. In Table 1, patterns 1 to 4 correspond to the respective current turnaround structures according to the aspects (1) to (4) of the present invention.
Table 1

Types of the current turnaround structure in which fuel is flowed:

| | pattern 1 | pattern 2 | pattern 3 | pattern 4 |
|---|---|---|---|---|
| interconnector B adjacent to air electrode layer | ○ | ○ | ○ | ○ |
| air electrode layer | X | X | ○ | ○ |
| electrolyte layer | ○ | ○ | ○ | ○ |
| fuel electrode layer | X | ○ | X | ○ |
| interconnector C adjacent to fuel electrode layer | ○ | ○ | ○ | ○ |
| electrically insulator substrate | - | - | - | - |

| | | | | |
|---|---|---|---|---|
| (Remarks) ○ : a current is turned around, X: a current is not turned around | | | | |

### (Embodiments of a segmented-in-series solid oxide fuel cell according to the aspects (5) to (8)) of the present invention, respectively)

First, features in common with the aspects (5) to (8) of the present invention are described, and subsequently, there are described individual embodiments of the segmented-in-series solid oxide fuel cell according to the aspects (5) to (8) of the present invention.

The segmented-in-series solid oxide fuel cell according to the aspects (5) to (8) is a segmented-in-series solid oxide fuel cell comprising a porous electrically insulating substrate having (a) an air flow path extending from an air feed port to an air discharge port, provided therein, and a pair of the top and back surfaces, in parallel with the air flow path, together with a pair of side-faces of the porous electrically insulating substrate, in the transverse direction thereof, provided on the exterior thereof; wherein (b) a plurality of solid oxide fuel cells made up by sequentially stacking an interconnector adjacent to an air electrode layer, the air electrode layer, an electrolyte layer, a fuel electrode layer, and an interconnector adjacent to the fuel electrode layer in that order so as to be in parallel with the air flow path are disposed at intervals on the pair of the top and back surfaces, respectively; and (c) the plurality of the solid oxide fuel cells are structured such that adjacent solid oxide fuel cells are electrically connected in series with each other through the intermediary of the respective interconnectors.

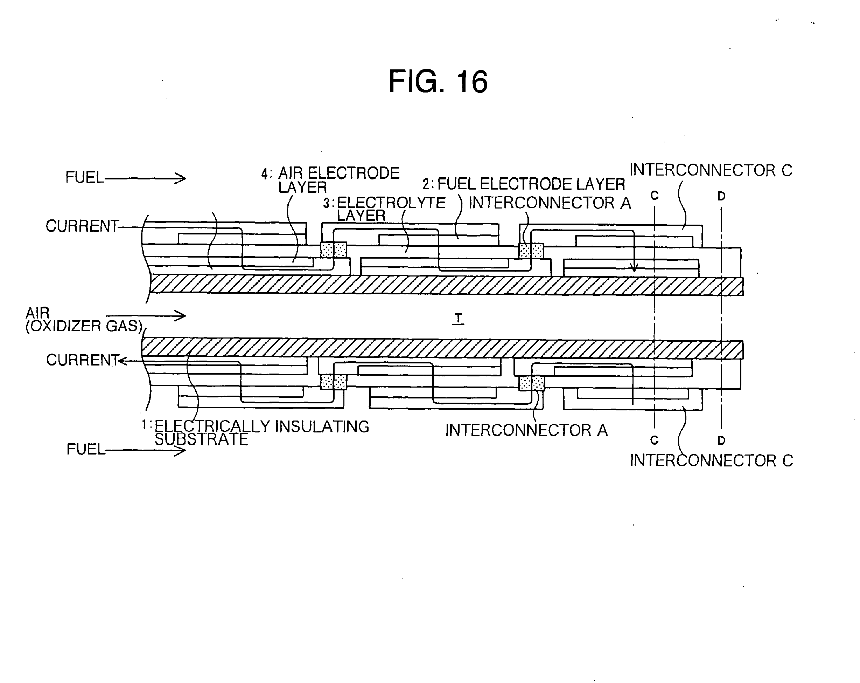

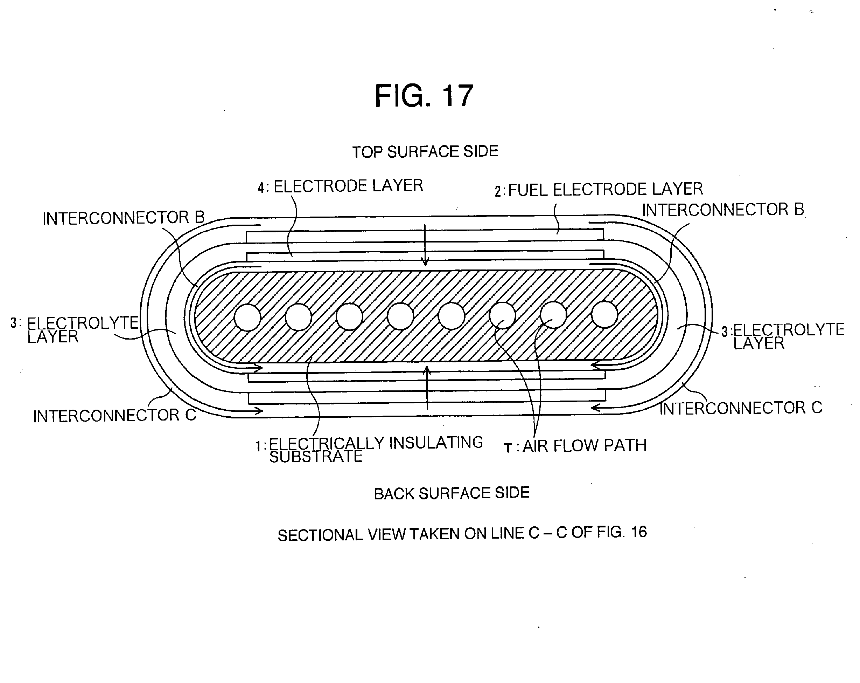

Figs. 16, 17 each are a view for describing the features in common with the aspects (5) to (8) of the present invention. Figs. 16, 17 correspond to Figs. 10, 11, respectively, the latter being the figures referred to in describing the group of the aspects (1) to (4) of the present invention. As shown in Figs. 16, 17, the interconnector B, the air electrode layer, the electrolyte layer, the fuel electrode layer, and the interconnector C are sequentially disposed in that order on both the top surface, and the back surface of the electrically insulating substrate in which the air flow path T extending from the air feed port to the air discharge port.

The electrically insulating substrate according to any one of the aspects (5) to (8) of the present invention differs from the electrically insulating substrate according to any one of the aspects (1) to (4) of the present invention in that the electrically insulating substrate is an electrically insulating substrate having an air flow path provided therein, and that the interconnector B, the air electrode layer, the electrolyte layer, the fuel electrode layer, and the interconnector C are sequentially disposed in that order on both the top and the back surfaces of the electrically insulating substrate. A part of the segmented-in-series solid oxide fuel cell, indicated as "the cell at the extreme end in the direction of the air flow" in Fig. 10, is a part of the segmented-in-series solid oxide fuel cell, for incorporating the current turnaround structure according to any one of the aspects (5) to (8) of the present invention,.

As shown in Fig. 16, the electrolyte layer, and the interconnector A are disposed on an upper surface of the air electrode layer provided on the back surface side of the electrically insulating substrate. The interconnector B of the cell at the extreme end in the direction of the air flow is electrically connected with the interconnector C of the cell immediately preceding the cell at the extreme end in the direction of the air flow by means of the interconnector A.

### (An embodiment of a segmented-in-series solid oxide fuel cell according to the aspect (5) of the present invention)

With the aspect (5) of the present invention, an interconnector B adjacent to an air electrode layer, an electrolyte layer, and an interconnector C adjacent to a fuel electrode layer, making up a pair of solid oxide fuel cells, positioned at the extreme end of the top and back surfaces of the electrically insulating substrate thereof, adjacent to an air discharge port, respectively, are extended to both the right and left side faces in the transverse direction of the electrically insulating substrate, to be disposed thereon, thereby making up a current turnaround structure.

Fig. 16 and Fig. 17 are a view illustrating features of the aspect (5) of the present invention and showing a current flow during operation of the segmented-in-series solid oxide fuel cell. As shown in Fig. 16, the interconnector B, the air electrode layer, the electrolyte layer, the fuel electrode layer and the interconnector C are sequentially disposed on the top surface of the electrically insulating substrate. Further, as shown in Fig. 16, the interconnector B, the air electrode layer, the electrolyte layer, the fuel electrode layer and the interconnector C are sequentially disposed on the back surface of the electrically insulating substrate.

Fig. 17 is a view illustrating the current turnaround structure serving as features of the aspect (5) of the present invention. and corresponds to the sectional view taken on line C - C of Fig. 16. As shown in Fig. 17, the interconnector B, the air electrode layer, the electrolyte layer, the fuel electrode layer and the interconnector C are sequentially disposed on the top and back surfaces of the electrically insulating substrate. Among those members, the interconnector B, the electrolyte layer and the interconnector C are sequentially disposed in this order on both side faces of the electrically insulating substrate, namely, on both the right and left side-faces of the electrically insulating substrate where the cell at the extreme end in the direction of fuel flow is positioned.

Thus, in the case of the aspect (5) of the present invention, with the pair of the solid oxide fuel cells, each being positioned on a side of the electrically insulating substrate, adjacent to the air discharge port, that is, at the extreme end thereof, in the direction of the air flow, provided on either of the pair of the top and back surfaces thereof, the interconnector B adjacent to the air electrode layer, the electrolyte layer and the interconnector C adjacent to the fuel electrode layer are extended to, and disposed on the right side-face and the left side-face of the electrically insulating substrate of the solid oxide fuel cells, respectively, so as to be integrated together, thereby making up a current-turnaround structure.

By so doing, there is made up a structure wherein the cells at the end of the electrically insulating substrate, in the direction of the airflow, on the top surface side, and the back surface side thereof, respectively, are disposed between the common interconnector B, and the common interconnector C. And the two cells positioned at the most downstream end in the direction of the airflow, disposed on the top surface and the back surface, respectively, act as cells for power generation, and as current-turnaround means.

A current flow in the current turnaround structure according to the aspect (5) of present invention is described hereinafter with reference to Figs. 16, and 17. As shown in Fig. 16, the interconnector B, and the interconnector C are extended from the back surface side of the electrically insulating substrate to the top surface thereof, and toward both the right and left sides of the electrically insulating substrate, in the transverse direction thereof. Accordingly, a current flowing from the cell immediately preceding a current turnaround spot is turned around to flow from the top surface side of the electrically insulating substrate toward the back surface side thereof via the respective interconnectors C on the right and left sides to reach the air electrode layer on the back surface side thereof, thereby turning on a current generated by the cell on the back surface side (= the cell having a structure of (the fuel electrode layer - the electrolyte layer - the air electrode layer)), whereupon the current reaches the interconnector B of the cell on the top surface side of the electrically insulating substrate.

At this point in time, the cell (= the cell having the structure of (the fuel electrode layer - the electrolyte layer - the air electrode layer)), positioned at the current turnaround spot on the top surface side, as well, generates power, so that a current generated by this cell is turned around to flow from the top surface side of the electrically insulating substrate to the back surface side thereof via the respective interconnectors C on the right and left sides to reach the interconnector B on the top surface side of the electrically insulating substrate, as above.

More specifically, flowing to the interconnector C, on the back surface side, is a composite current composed of (a) the current flowing from the cell immediately preceding the current turnaround spot, on the top surface side, (b) the current generated by the cell at the current turnaround spot on the top surface side, and (c) the current generated by the cell at the current turnaround spot, on the back surface side. Then, the composite current flows to the cell immediately preceding the current turnaround spot, on the top surface side via the interconnector A, and the interconnector C, continuous from the interconnector B.

Further, it is conceivable that the interconnector B adjacent to the air electrode layer, the electrolyte layer, and the interconnector C adjacent to the fuel electrode layer are disposed on one side-face of the right and left side-faces of the electrically insulating substrate, however, if those members are extended to the right and left side-faces of the electrically insulating substrate to be disposed thereon as is the case with the aspect (5) of the present invention, this will enable electrical resistance to be lowered and further, those layers can be formed on the top and back surfaces as well as the right and left side-faces by use of the same kind of material, so that formation of the structure will be easier as compared with the case of disposing those members on the one side-face of the right and left side-faces of the electrically insulating substrate while extended thereto.

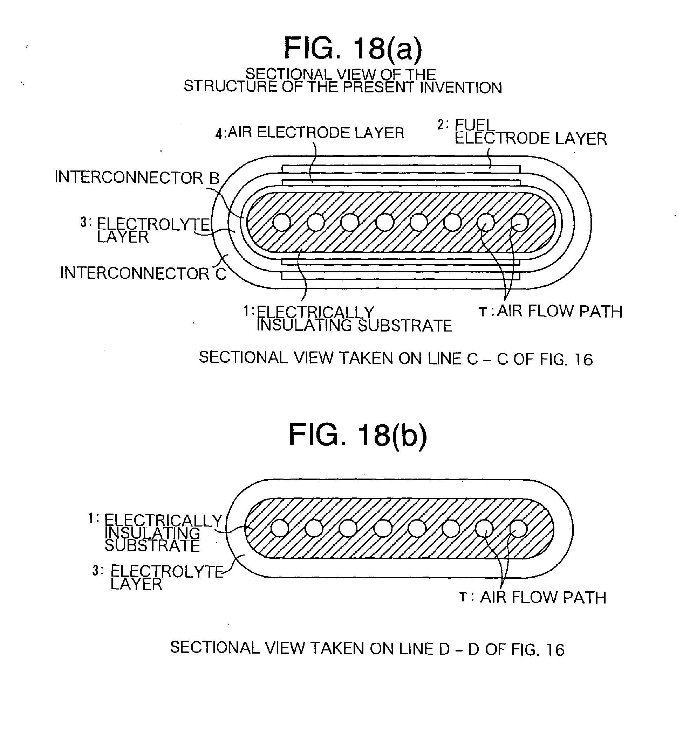

Figs. 18(a), and 18(b) are sectional views taken on line C - C, and D - D of Fig. 16, respectively. As shown in Fig. 5(b) [= Fig. 6(b)] previously referred to, in the case of the conventional structure, there is the need for disposing " the current turnaround member (metal)" at the end of the electrically insulating substrate, however, with the aspect (5) of the present invention, "a current turnaround member (metal)" is no longer required, so that the segmented-in-series solid oxide fuel cell can be simplified in terms of structure. The same can be said of the current turnaround structure according to any one of the aspects (6) to (8) of the present invention.

With the aspect (5) of the present invention, since a member such as a metal band, susceptible to oxidation in an oxidizing atmosphere, is not used in the current turnaround part, there is no risk of a short-circuit, and further, since use of dissimilar materials is avoided, a highly reliable current turnaround part can be constructed. In addition, since a power generation area at the most downstream end in the direction of the fuel flow can be enlarged, cell durability can be enhanced. The same can be said of the current turnaround structure according to any one of the aspects (6) to (8) of the present invention.

### (An embodiment of a segmented-in-series solid oxide fuel cell according to the aspect (6) of the present invention)

With the aspect (6) of the present invention, an interconnector B adjacent to an air electrode layer, an electrolyte layer, a fuel electrode layer, and an interconnector C adjacent to the fuel electrode layer, making up a pair of solid oxide fuel cells, positioned at the extreme end of the top and back surfaces of the electrically insulating substrate thereof, adjacent to an air discharge port, respectively, are extended to both the right and left side faces in the transverse direction of the electrically insulating substrate, to be disposed thereon, thereby making up a current turnaround structure.

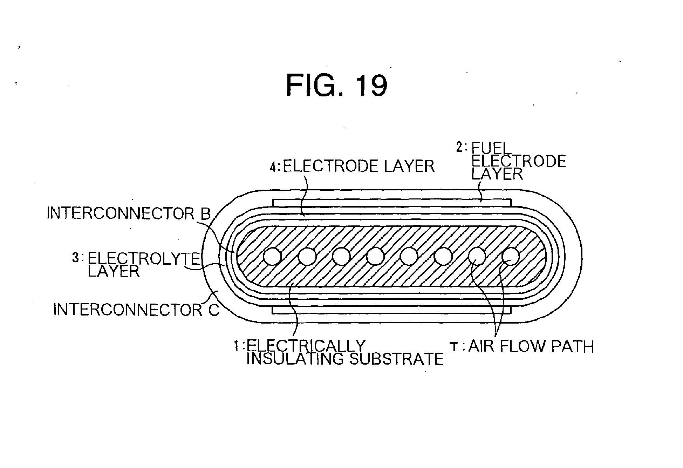

Fig. 19 is a view illustrating features of the aspect (6) of the present invention and a sectional view showing the current turnaround spot at the most downstream end in the direction of air flow. As shown in Fig. 19, the interconnector B, the air electrode layer, the electrolyte layer, the fuel electrode layer, and the interconnector C are sequentially disposed on the top and back surfaces of the electrically insulating substrate. Among those members, the interconnector B, the air electrode layer, the electrolyte layer, the fuel electrode layer, and the interconnector C are sequentially disposed in this order on both side faces of the electrically insulating substrate, namely, on both the right and left side-faces of the electrically insulating substrate where the cell at the extreme end in the direction of air flow is positioned.

Thus, in the case of the aspect (6) of the present invention, with the pair of the solid oxide fuel cells, each being positioned on a side of the electrically insulating substrate, adjacent to the air discharge port, that is, at the extreme end thereof, in the direction of the air flow, provided on either of the pair of the top and back surfaces thereof, the interconnector B adjacent to the air electrode layer, the air electrode layer, the electrolyte layer and the interconnector C adjacent to the fuel electrode layer are extended to, and disposed on the right side-face and the left side-face of the electrically insulating substrate, respectively, so as to be integrated together, thereby making up a shared current-turnaround structure. A current flow in the current turnaround structure during operation of the fuel cell is the same as described in the embodiment according to the aspect (5) of the present invention.

### (An embodiment of a segmented-in-series solid oxide fuel cell according to the aspect (7) of the present invention)

With the aspect (7) of the present invention, an interconnector B adjacent to an air electrode layer, the air electrode layer, an electrolyte layer, and an interconnector C adjacent to a fuel electrode layer, making up a pair of solid oxide fuel cells, positioned at the extreme end of the top and back surfaces of the electrically insulating substrate thereof, adjacent to an air discharge port, respectively, are extended to both the right and left side faces in the transverse direction of the electrically insulating substrate, to be disposed thereon, thereby making up a current turnaround structure.

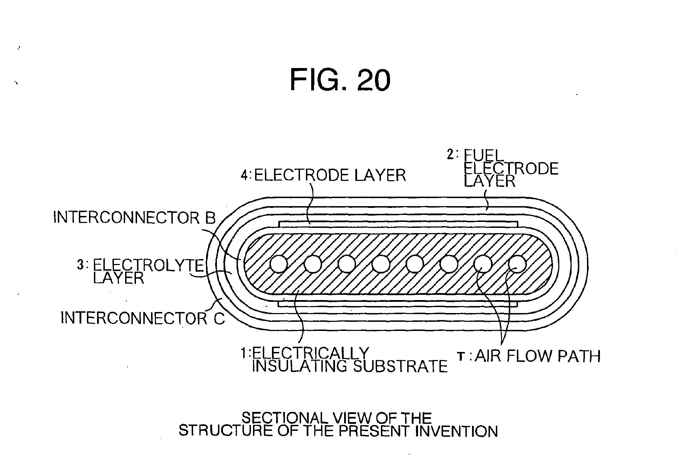

Fig. 20 is a view illustrating features of the aspect (7) of the present invention and a sectional view showing the current turnaround spot at the most downstream end in the direction of air flow. As shown in Fig. 20, the interconnector B, the air electrode layer, the electrolyte layer, the fuel electrode layer, and the interconnector C are sequentially disposed on the top and back surfaces of the electrically insulating substrate. Among those members, the interconnector B, the electrolyte layer, the fuel electrode layer, and the interconnector C are sequentially disposed in this order on both side faces of the electrically insulating substrate, namely, on both the right and left side-faces of the electrically insulating substrate where the cell at the extreme end in the direction of air flow is positioned.

Thus, in the case of the aspect (7) of the present invention, with the pair of the solid oxide fuel cells, each being positioned on a side of the electrically insulating substrate, adjacent to the air discharge port, that is, at the extreme end thereof, in the direction of the air flow, provided on either of the pair of the top and back surfaces thereof, the interconnector B adjacent to the air electrode layer, the electrolyte layer, the fuel electrode layer and the interconnector C adjacent to the fuel electrode layer are extended to, and disposed on the right side-face and the left side-face of the electrically insulating substrate, respectively, so as to be integrated together, thereby making up a shared current-turnaround structure. A current flow in the current turnaround structure during operation of the fuel cell is the same as described in the embodiment according to the aspect (5) of the present invention.

### (An embodiment of a segmented-in-series solid oxide fuel cell according to the aspect (8) of the present invention)

With the aspect (8) of the present invention, an interconnector B adjacent to an air electrode layer, the air electrode layer, an electrolyte layer, a fuel electrode layer, and an interconnector C adjacent to the fuel electrode layer, making up a pair of solid oxide fuel cells, positioned at the extreme end of the top and back surfaces of the electrically insulating substrate thereof, adjacent to an air discharge port, respectively, are extended to both the right and left side faces in the transverse direction of the electrically insulating substrate, to be disposed thereon, thereby making up a current turnaround structure.

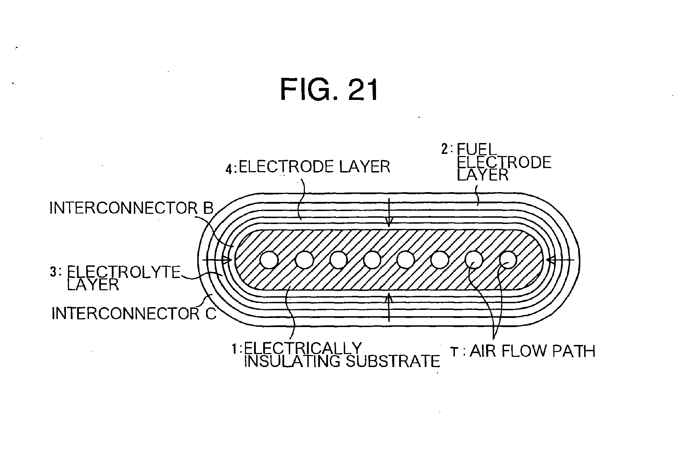

Fig. 21 is a view illustrating features of the aspect (8) of the present invention and a sectional view showing the current turnaround spot at the most downstream end in the direction of air flow. As shown in Fig. 21, the interconnector B, the air electrode layer, the electrolyte layer, the fuel electrode layer, and the interconnector C are sequentially disposed on the top and back surfaces of the electrically insulating substrate. The interconnector B, the air electrode layer, the electrolyte layer, the fuel electrode layer, and the interconnector C are also sequentially disposed in this order on both the right and left side-faces of the electrically insulating substrate where the cell at the extreme end in the direction of air flow is positioned.

Thus, in the case of the aspect (8) of the present invention, with the pair of the solid oxide fuel cells, each being positioned on a side of the electrically insulating substrate, adjacent to the air discharge port, that is, at the extreme end thereof, in the direction of the air flow, provided on either of the pair of the top and back surfaces thereof, the interconnector B adjacent to the air electrode layer, the air electrode layer, the electrolyte layer, the fuel electrode layer and the interconnector C adjacent to the fuel electrode layer are extended to, and disposed on the right side-face and the left side-face of the electrically insulating substrate, respectively, so as to be integrated together, thereby making up a shared current-turnaround structure.

More specifically, the interconnector B is disposed on the right side-face and the left side-face of a part of the electrically insulating substrate, positioned at the most downstream end in the direction of the air flow in addition to both the top side surface and the back surface side of the electrically insulating substrate, that is, on the entire peripheral surface of the electrically insulating substrate, the air electrode layer is disposed on the entire peripheral surface of the interconnector B, the electrolyte layer is disposed on the entire peripheral surface of the air electrode layer, the fuel electrode layer is disposed on the entire peripheral surface of the electrolyte layer, and further, the interconnector C is disposed on the entire peripheral surface of the fuel electrode layer, thereby completing a structure wherein one cell, the interconnector B adjacent to the air electrode layer, and the interconnector C adjacent to the fuel electrode layer are disposed on the entire peripheral surface of the part of the electrically insulating substrate, at the most downstream end in the direction of the air flow.

The fuel electrode layer - the electrolyte layer - the air electrode layer is made up between the interconnector B, and the interconnector C, and the one cell acts as a cell for power generation, and as current-turnaround means. With the aspect (8) of the present invention, the cell area of a current turnaround part is enlarged, so that the current density of the cell can be effectively lowered than that of other cells, thereby enabling potential drop to be checked.

In Figs. 16, 21, there is shown a current flow in the current turnaround structure. With the segmented-in-series solid oxide fuel cell having the current turnaround structure according to the aspect (8) of the present invention, a current during operation flows from the cell immediately preceding the current turnaround spot at the most downstream end in the direction of the air flow to the interconnector C of a current turnaround spot via the interconnector A to thence flow to the cell in the current turnaround spot before flowing to the interconnector B.

Table 2 shows various types of the current turnaround structure according to any one of aspects (5) to (8) of the present invention. In Table 2, patterns 5 to 8 each correspond to the current turnaround structure according to any one of aspects (5) to (8) of the present invention.

### Table 2

Types of the current turnaround structure in which air (an oxidizer) is flowed^{:}

| | pattern 5 | pattern 6 | pattern 7 | pattern 8 |
|---|---|---|---|---|
| interconnector. C adjacent to fuel electrode layer | ○ | ○ | ○ | ○ |
| fuel electrode layer | X | ○ | X | ○ |
| electrolyte layer | ○ | ○ | ○ | ○ |
| air electrode layer | X | X | ○ | ○ |
| interconnector. B adjacent to air electrode layer | ○ | ○ | ○ | ○ |
| electrically insulating substrate | - | - | - | - |

| | | | | |
|---|---|---|---|---|
| (Remarks) ○ : a current is turned around, X: a current is not turned around | | | | |

### <Internal stress tests conducted on the segmented-in-series solid oxide fuel cell according to the present invention, and the segmented-in-series solid oxide fuel cell of the conventional structure, respectively>

A sample of the segmented-in-series solid oxide fuel cell according to the present invention, and a sample of the segmented-in-series solid oxide fuel cell of the conventional structure were prepared and an internal stress was measured on each of the samples.

### <Preparation of the sample of the segmented-in-series solid oxide fuel cell according to the present invention>

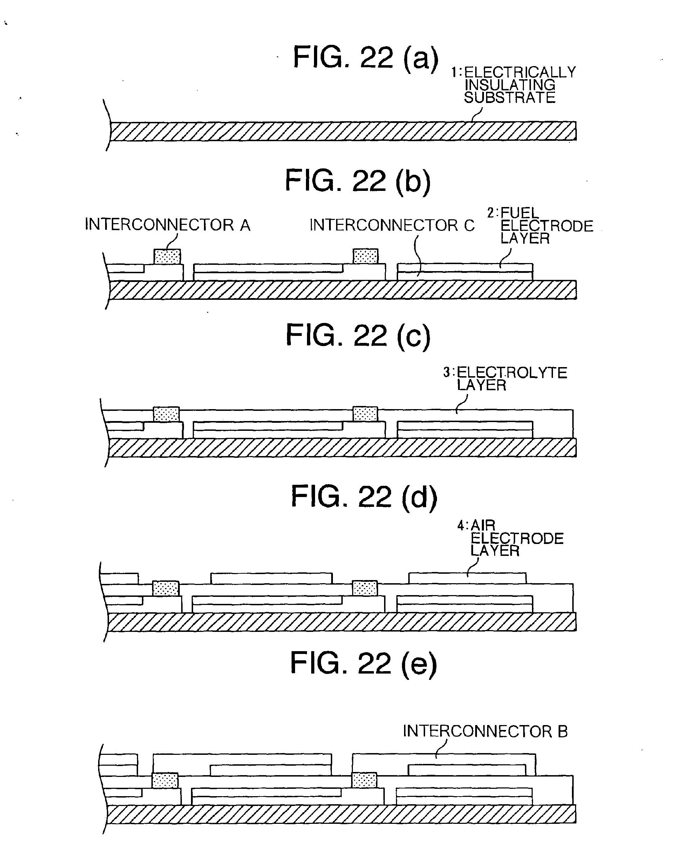

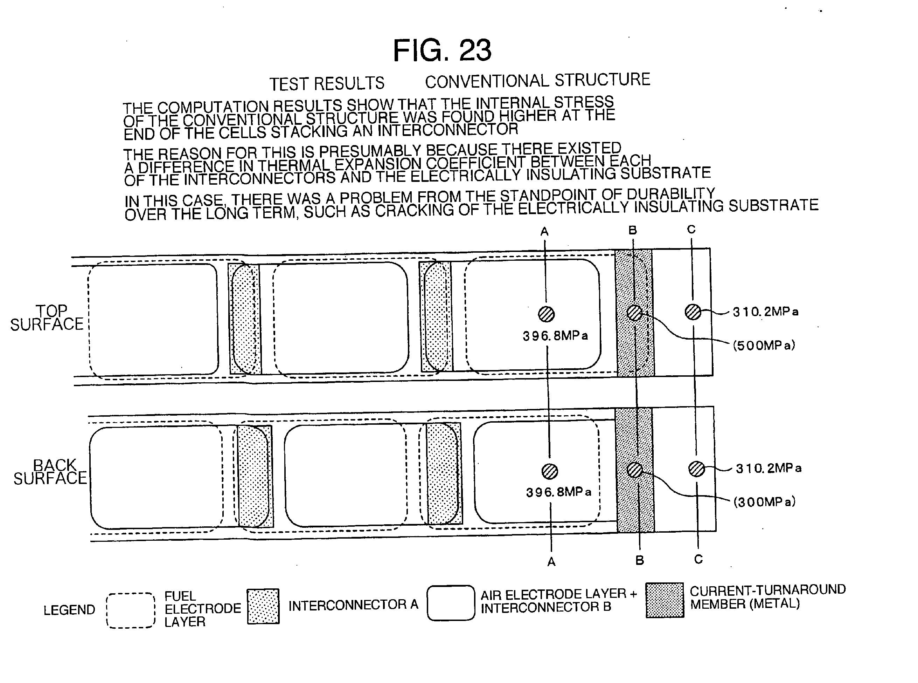

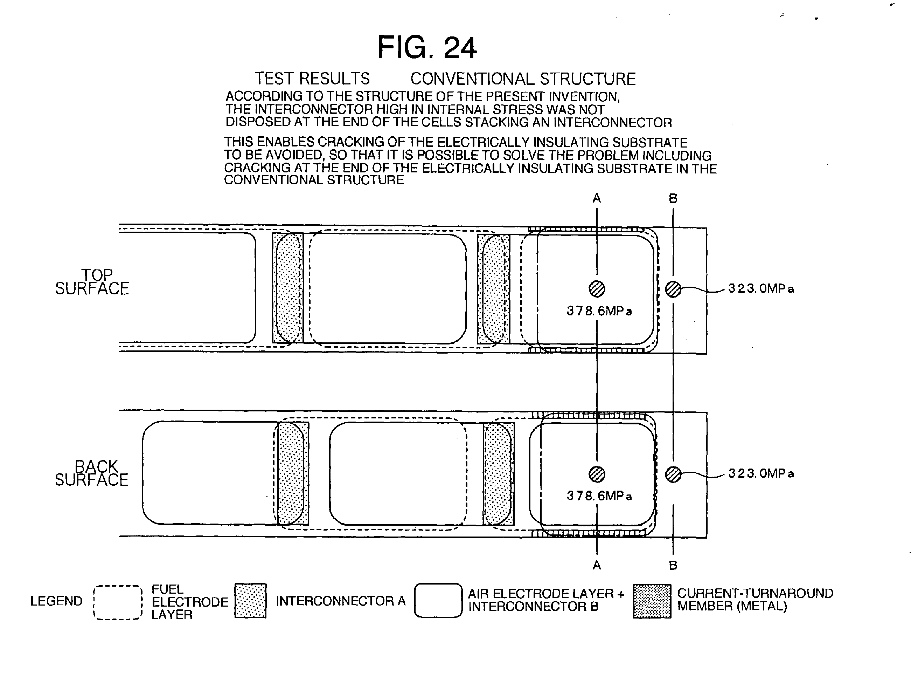

The sample for the internal stress test was prepared in accordance with a fabrication process shown in Figs. 22(a) to 22(e). Figs. 22(a) to 22(e) each are a partially cutaway view showing process steps from fabrication of a porous electrically insulating substrate up to formation of a structure shown in Figs. 23, 24, respectively.

### <1. Fabrication of a porous electrically insulating substrate>

For the constituent material of a porous electrically insulating substrate, use was made of mixed ceramics composed of NiO, MgO, and Y₂O₃. Respective raw material powders NiO, MgO, and Y₂O₃ were prepared. Those raw material powders were weighed so as to be at 15 mol%, 72 mol%, and 13 mol%, respectively, and carbon powders, together with cellulose, to serve as a pore-forming material, were added thereto, adding further water thereto before mixing in a ball mill. A mixture thus obtained was sufficiently mixed, and dispersed through 3-stand rolling mills to thereby form a substrate by use of an extruder, and the substrate was subjected to sintering at 1200°C for two hours, whereupon an electrically insulating substrate was fabricated. This state is shown in Fig. 22(a)

### <2. Formation of an interconnector C>

An organic solvent, an organic binder, a dispersant, and an anti-foam agent were added to powders obtained by mixing NiO with YSZ at a mass ratio of 3 : 2 to be mixed in a ball mill, thereby preparing a slurry. The slurry was formed into a sheet on a film (a release sheet) by the doctor blade method to be subsequently dried to thereby form an interconnector C. The constituent material of the interconnector C may be the same material as used for the fuel electrode layer, as previously described, and in this case, use was made of a material similar to that for the fuel electrode layer, composed of NiO and YSZ although a mass ratio of NiO : YSZ differs from that for the fuel electrode layer.

### <3. Formation of a fuel electrode layer>

An organic solvent, an organic binder, a dispersant, and an anti-foam agent were added to powders obtained by mixing NiO with YSZ at a mass ratio of 2 : 3 to be mixed in a ball mill, thereby preparing a slurry. The slurry was formed into a sheet on the top surface of the interconnector C by the doctor blade method to be subsequently dried to thereby execute laminated molding of a fuel electrode layer.

### <4. Formation of an interconnector A>

An organic solvent, an organic binder, a dispersant, and an anti-foam agent were added to lanthanum chromate (La_{0.8}Sr_{0.2}CrO₃) powders to be mixed in a ball mill to thereby prepare a slurry, and the slurry was applied by the screen printing method to a predetermined position of the fuel electrode layer as sheet-formed on a film formed in the step of (3. formation of a fuel electrode layer) to be dried, thereby execute laminated molding of an interconnector A

The interconnector C, the fuel electrode layer, and the interconnector A, in as-laminated state, were peeled off from the film with the interconnector C, the fuel electrode layer, and the interconnector A, laminated thereon, to be glued onto the electrically insulating substrate, whereupon the interconnector C, the fuel electrode layer, and the interconnector A were formed on the top of the electrically insulating substrate. Work in process after the process steps as above was fired at 1150°C. This state is shown in Fig. 22(b).

### <5. Formation of an electrolyte layer>

Work in process in the state shown in Fig. 22(b) was dipped into a slurry prepared by adding an organic solvent, an organic binder, and a dispersant to YSZ to be mixed in a ball mill. At that time, the outer peripheries of both the side of the electrically insulating substrate, at the most downstream end thereof, in the direction of a fuel flow, as well, were dipped into the slurry. Thereafter, work in process was fired at 1450°C to thereby form an electrolyte layer. This state is shown in Fig. 22(c). Prior to dipping, masking was applied to spots other than a spot for forming the electrolyte layer.

### <6. Formation of an air electrode layer>

An organic solvent, an organic binder, a dispersant, and an anti-foam agent were added to a perovskite oxide [(La_{0.6}Sro_{0.4}) Co_{0.2}Fe_{0.8}O₃]powders to be mixed in a ball mill for 20 hours to thereby prepare a slurry. The slurry was applied by the screen-printing method to the surface of a film of the electrolyte layer obtained in the step <5. formation of an electrolyte layer> as above to be subsequently fired at 1150°C. This state is shown in Fig. 22(d).

### <7. Formation of an interconnector B>

Subsequently, an AgPd paste to serve as an interconnector B was applied between the air electrode layer, and the interconnector A to thereby connect both members with each other. At that time, the paste was also applied to the outer peripheral surfaces on the side of the electrically insulating substrate, at the most downstream end thereof, in the direction of the fuel flow. This state is shown in Fig. 22(e).

Thus, there were prepared the sample of the segmented-in-series solid oxide fuel cell wherein six cells were disposed on the top surface side of the electrically insulating substrate, and six cells were disposed the back surface side thereof. Herein, the cell at the rightmost end of the electrically insulating substrate, in the figure, that is, the most downstream end thereof, in the direction of the fuel flow, on the top surface side thereof, are joined with the cell at the rightmost end of the electrically insulating substrate, that is, the most downstream end thereof, in the direction of the fuel flow, on the back surface side thereof, thereby making up one cell, so that the number of the cells will be eleven in total.

### <Preparation of the sample of the segmented-in-series solid oxide fuel cell of the conventional structure>

While under the heading of (Preparation of the sample of the segmented-in-series solid oxide fuel cell according to the present invention) described as above, it is described that the fuel electrode layer, the electrolyte layer and the interconnector B are disposed on the outer peripheral surfaces on both the side of the electrically insulating substrate, at the most downstream end thereof, in the direction of the fuel flow, as well, the sample of the segmented-in-series solid oxide fuel cell of the conventional structure was prepared in the same way as that described in (Preparation of the sample of the segmented-in-series solid oxide fuel cell according to the present invention) as above, except that the fuel electrode layer, the electrolyte layer and the interconnector B were not disposed on the outer peripheral surfaces on both the side of the electrically insulating substrate, at the most downstream end thereof, in the direction of the fuel flow.

### <Internal stress of the segmented-in-series solid oxide fuel cell of the conventional structure>

As for the segmented in series solid oxide fuel cell of the conventional structure, the internal stress thereof was measured by the X-ray stress measuring method. This measurement was taken in accordance with the method described in "Lecture Summaries of the 15th SOFC Study Forum (held at Science Technology Hall, Tokyo, during Dec. 5 to 6, 2006), pp. 28 to 34". The same applies to measurement under the heading (Internal stress of the segmented-in-series solid oxide fuel cell according to the present invention) described later in the present sp ecification.

Table 3, and Fig. 23 each show test results. In Table 3, and Fig. 23, computation results as well are indicated besides the test results, and in Fig. 23, the computation results are shown in parentheses.

As shown in Table 3, and Fig. 23, respectively, the internal stress of the conventional structure was found higher. The reason for this is presumably because there existed a difference in thermal expansion coefficient between each of the interconnectors and the electrically insulating substrate. In this case, there was a problem from the standpoint of durability over the long term, such as cracking of the electrically insulating substrate.

**Table 3**

| | | spot along line A - A | spot along line B - B | spot along line C - C |
|---|---|---|---|---|
| computation | top surface | 400 MPa | 500 MPa | 300 MPa |
| results | back surface | 400 MPa | 300 MPa | 300 MPa |
| test results | electrolyte layer portion | 396.8 | - | 310.2 |
| | | MPa | | MPa |

### <Internal stress of the segmented in series solid oxide fuel cell according to the present invention>

As for the segmented in series solid oxide fuel cell according to the present invention, the internal stress thereof was measured by the X-ray stress measuring method. Table 4, and Fig. 24 each show test results. In Table 4, computation results as well are shown besides the test results. As shown in Table 4, and Fig. 24, in the case of the structure according to the present invention, the interconnector high in internal stress was not disposed at the most downstream end of the electrically insulating substrate, in the direction of the fuel flow. This enables cracking of the electrically insulating substrate to be avoided, which is advantageous from the standpoint of durability over the long term, so that it is possible to solve the problem including cracking at the end of the electrically insulating substrate in the conventional structure.

**Table 4**

| | | spot along line A - A | spot along lineB-B |
|---|---|---|---|
| computation results | top surface | 400 MPa | 500 MPa |
| | back surface | 400 MPa | 300 MPa |
| test results | electrolyte layer portion | 378.6 MPa | 323.0 MPa |

## Claims

1. A segmented-in-series solid oxide fuel cell comprising a porous electrically insulating substrate having (a) a fuel flow path extending from a fuel feed port to a fuel discharge port, provided therein, and a pair of the top and back surfaces, in parallel with the fuel flow path, together with a pair of side-faces of the porous electrically insulating substrate, in the transverse direction thereof, provided on the exterior thereof; wherein
(b) a plurality of solid oxide fuel cells made up by sequentially stacking an interconnector adjacent to a fuel electrode layer, the fuel electrode layer, an electrolyte layer, an air electrode layer, and an interconnector adjacent to the air electrode layer in that order so as to be in parallel with the fuel flow path are disposed at intervals on the pair of the top and back surfaces, respectively;
(c) the plurality of the solid oxide fuel cells are structured such that adjacent solid oxide fuel cells are electrically connected in series with each other through the intermediary of the respective interconnectors; and
(d) a current turnaround structure is made up by extending the interconnector adjacent to the fuel electrode layer, the electrolyte layer, and the interconnector adjacent to the air electrode layer, making up a pair of the solid oxide fuel cells, positioned at the extreme end of the electrically insulating substrate, in the longitudinal direction thereof, adjacent to the fuel discharge port, on the pair of the top and back surfaces of the electrically insulating substrate, respectively, to both the side faces of the electrically insulating substrate, in the transverse direction thereof, to be disposed thereon.

2. A segmented-in-series solid oxide fuel cell comprising a porous electrically insulating substrate having (a) a fuel flow path extending from a fuel feed port to a fuel discharge port, provided therein, and a pair of the top and back surfaces, in parallel with the fuel flow path, together with a pair of side-faces of the porous electrically insulating substrate, in the transverse direction thereof, provided on the exterior thereof; wherein
(b) a plurality of solid oxide fuel cells made up by sequentially stacking an interconnector adjacent to a fuel electrode layer, the fuel electrode layer, an electrolyte layer, an air electrode layer, and an interconnector adjacent to the air electrode layer in that order so as to be in parallel with the fuel flow path are disposed at intervals on the pair of the top and back surfaces, respectively;
(c) the plurality of the solid oxide fuel cells are structured such that adjacent solid oxide fuel cells are electrically connected in series with each other through the intermediary of the respective interconnectors; and
(d) a current turnaround structure is made up by extending the interconnector adjacent to the fuel electrode layer, the fuel electrode layer, the electrolyte layer, and the interconnector adjacent to the air electrode layer, making up a pair of the solid oxide fuel cells, positioned at the extreme end of the electrically insulating substrate, in the longitudinal direction thereof, adjacent to the fuel discharge port, on the pair of the top and back surfaces of the porous electrically insulating substrate, respectively, to both the side faces in the transverse direction of the electrically insulating substrate to be disposed thereon.

3. A segmented-in-series solid oxide fuel cell comprising a porous electrically insulating substrate having (a) a fuel flow path extending from a fuel feed port to a fuel discharge port, provided therein, and a pair of the top and back surfaces, in parallel with the fuel flow path, together with a pair of side-faces of the porous electrically insulating substrate, in the transverse direction thereof, provided on the exterior thereof; wherein
(b) a plurality of solid oxide fuel cells made up by sequentially stacking an interconnector adjacent to a fuel electrode layer, the fuel electrode layer, an electrolyte layer, an air electrode layer, and an interconnector adjacent to the air electrode layer in that order so as to be in parallel with the fuel flow path are disposed at intervals on the pair of the top and back surfaces, respectively;
(c) the plurality of the solid oxide fuel cells are structured such that adjacent solid oxide fuel cells are electrically connected in series with each other through the intermediary of the respective interconnectors; and
(d) a current turnaround structure is made up by extending the interconnector adjacent to the fuel electrode layer, the electrolyte layer, the air electrode layer, and the interconnector adjacent to the air electrode layer, making up a pair of the solid oxide fuel cells, positioned at the extreme end of the electrically insulating substrate, in the longitudinal direction thereof, adjacent to the fuel discharge port, on the pair of the top and back surfaces of the porous electrically insulating substrate, respectively, to both the side faces in the transverse direction of the electrically insulating substrate to be disposed thereon.

4. A segmented-in-series solid oxide fuel cell comprising a porous electrically insulating substrate having (a) a fuel flow path extending from a fuel feed port to a fuel discharge port, provided therein, and a pair of the top and back surfaces, in parallel with the fuel flow path, together with a pair of side-faces of the porous electrically insulating substrate, in the transverse direction thereof, provided on the exterior thereof; wherein
(b) a plurality of solid oxide fuel cells made up by sequentially stacking an interconnector adjacent to a fuel electrode layer, the fuel electrode layer, an electrolyte layer, and an air electrode layer, and an interconnector adjacent to the air electrode layer in that order so as to be in parallel with the fuel flow path are disposed at intervals on the pair of the top and back surfaces, respectively;
(c) the plurality of the solid oxide fuel cells are structured such that adjacent solid oxide fuel cells are electrically connected in series with each other through the intermediary of the respective interconnectors; and
(d) a current turnaround structure is made up by extending the interconnector adjacent to the fuel electrode layer, the fuel electrode layer, the electrolyte layer, the air electrode layer, and the interconnector adjacent to the air electrode layer, making up a pair of the solid oxide fuel cells, positioned at the extreme end of the electrically insulating substrate, in the longitudinal direction thereof, adjacent to the fuel discharge port, on the pair of the top and back surfaces of the porous electrically insulating substrate, respectively, to both the side faces in the transverse direction of the electrically insulating substrate to be disposed thereon.

5. A segmented-in-series solid oxide fuel cell comprising a porous electrically insulating substrate having (a) an air flow path extending from an air feed port to an air discharge port, provided therein, and a pair of the top and back surfaces, in parallel with the air flow path, together with a pair of side-faces of the porous electrically insulating substrate, in the transverse direction thereof, provided on the exterior thereof; wherein
(b) a plurality of solid oxide fuel cells made up by sequentially stacking an interconnector adjacent to an air electrode layer, the air electrode layer, an electrolyte layer, a fuel electrode layer, and an interconnector adjacent to the fuel electrode layer in that order so as to be in parallel with the air flow path are disposed at intervals on the pair of the top and back surfaces, respectively;
(c) the plurality of the solid oxide fuel cells are structured such that adjacent solid oxide fuel cells are electrically connected in series with each other through the intermediary of the respective interconnectors; and
(d) a current turnaround structure is made up by extending the interconnector adjacent to the air electrode layer, the electrolyte layer and the interconnector adjacent to the fuel electrode layer, making up a pair of the solid oxide fuel cells, positioned at the extreme end of the electrically insulating substrate, in the longitudinal direction thereof, adjacent to the air discharge port, on the pair of the top and back surfaces of the porous electrically insulating substrate, respectively, to both the side faces in the transverse direction of the electrically insulating substrate to be disposed thereon.

6. A segmented-in-series solid oxide fuel cell comprising a porous electrically insulating substrate having (a) an air flow path extending from an air feed port to an air discharge port, provided therein, and a pair of the top and back surfaces, in parallel with the air flow path, together with a pair of side-faces of the porous electrically insulating substrate, in the transverse direction thereof, provided on the exterior thereof; wherein
(b) a plurality of solid oxide fuel cells made up by sequentially stacking an interconnector adjacent to an air electrode layer, the air electrode layer, an electrolyte layer, a fuel electrode layer, and an interconnector adjacent to the fuel electrode layer in that order so as to be in parallel with the air flow path are disposed at intervals on the pair of the top and back surfaces, respectively;
(c) the plurality of the solid oxide fuel cells are structured such that adjacent solid oxide fuel cells are electrically connected in series with each other through the intermediary of the respective interconnectors; and
(d) a current turnaround structure is made up by extending the interconnector adjacent to the air electrode layer, the electrolyte layer, the fuel electrode layer, and the interconnector adjacent to the fuel electrode layer, making up a pair of the solid oxide fuel cells, positioned at the extreme end of the electrically insulating substrate, in the longitudinal direction thereof, adjacent to the air discharge port, on the pair of the top and back surfaces of the porous electrically insulating substrate, respectively, to both the side faces in the transverse direction of the electrically insulating substrate to be disposed thereon.

7. A segmented-in-series solid oxide fuel cell comprising a porous electrically insulating substrate having (a) an air flow path extending from an air feed port to an air discharge port, provided therein, and a pair of the top and back surfaces, in parallel with the air flow path, together with a pair of side-faces of the porous electrically insulating substrate, in the transverse direction thereof, provided on the exterior thereof; wherein
(b) a plurality of solid oxide fuel cells made up by sequentially stacking an interconnector adjacent to an air electrode layer, the air electrode layer, an electrolyte layer, a fuel electrode layer, and an interconnector adjacent to the fuel electrode layer in that order so as to be in parallel with the air flow path are disposed at intervals on the pair of the top and back surfaces, respectively, and
(c) the plurality of the solid oxide fuel cells are structured such that adjacent solid oxide fuel cells are electrically connected in series with each other through the intermediary of the respective interconnectors; and
(d) a current turnaround structure is made up by extending the interconnector adjacent to the air electrode layer, the air electrode layer, the electrolyte layer and the interconnector adjacent to the fuel electrode layer, making up a pair of the solid oxide fuel cells, positioned at the extreme end of the electrically insulating substrate, in the longitudinal direction thereof, adjacent to the air discharge port, on the pair of the top and back surfaces of the porous electrically insulating substrate, respectively, to both the side faces in the transverse direction of the electrically insulating substrate to be disposed thereon.

8. A segmented-in-series solid oxide fuel cell comprising a porous electrically insulating substrate having (a) an air flow path extending from an air feed port to an air discharge port, provided therein, and a pair of the top and back surfaces, in parallel with the fuel flow path, together with a pair of side-faces of the porous electrically insulating substrate, in the transverse direction thereof, provided on the exterior thereof; wherein
(b) a plurality of solid oxide fuel cells made up by sequentially stacking an interconnector adjacent to an air electrode layer, the air electrode layer, an electrolyte layer, a fuel electrode layer, and an interconnector adjacent to the fuel electrode layer in that order so as to be in parallel with the air flow path are disposed at intervals on the pair of the top and back surfaces, respectively;
(c) the plurality of the solid oxide fuel cells are structured such that adjacent solid oxide fuel cells are electrically connected in series with each other through the intermediary of the respective interconnectors; and
(d) a current turnaround structure is made up by extending the interconnector adjacent to the air electrode layer, the air electrode layer, the electrolyte layer, the fuel electrode layer, and the interconnector adjacent to the fuel electrode layer, making up a pair of the solid oxide fuel cells, positioned at the extreme end of the electrically insulating substrate, in the longitudinal direction thereof, adjacent to the air discharge port, on the pair of the top and back surfaces of the porous electrically insulating substrate, respectively, to both the side faces in the transverse direction of the electrically insulating substrate to be disposed thereon.
